(19) Europäisches Patentamt
European Patent Office
Office européen des brevets

(11) EP 4 660 216 A1

(12) **EUROPEAN PATENT APPLICATION**

(43) Date of publication:
**10.12.2025 Bulletin 2025/50**

(21) Application number: **24315272.5**

(22) Date of filing: **06.06.2024**

(51) International Patent Classification (IPC):
***C08G 59/24*** *(2006.01)* ***C08G 59/32*** *(2006.01)*
***C08L 63/00*** *(2006.01)*

(52) Cooperative Patent Classification (CPC):
(C-Sets available)
**C08G 59/245; C08G 59/3218; C08L 63/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Illinois Tool Works Inc.**
**Glenview, IL 60025 (US)**

(72) Inventors:
- **Marasco, Jean-Paul**
**Glenview, IL Illinois 60025 (US)**
- **Quercy-Jouvet, Sophie**
**Glenview, IL Illinois 60025 (US)**

(74) Representative: **HGF**
**HGF SAS**
**Chez Regus - Rennes Cesson**
**2 rue Claude Chappe**
**35510 Cesson Sévigné (FR)**

# (54) TWO-COMPONENT ADHESIVE COMPOSITION

(57) Provided is a multi-component epoxy resin system comprising an epoxy resin mixture and a hardener. The epoxy resin mixture comprises a first epoxy resin component comprising a bisphenol A- and/or a bisphenol F-based epoxy resin, a second epoxy resin component comprising a novolac epoxy resin, at least one viscosity modifier and a filler. Also provided is a hardener for the multi-component epoxy resin system, a kit and methods of use. The multi-component epoxy resin system finds use as an adhesive, in particular in the chemical fastening of construction elements.

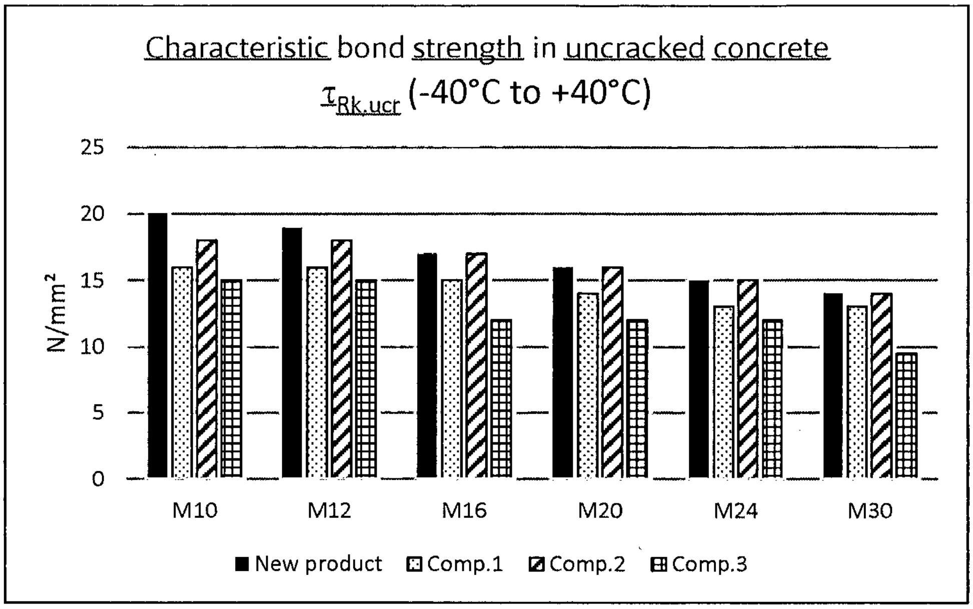


Figure 6



Processed by Luminess, 75001 PARIS (FR)

(Cont. next page)

(52) Cooperative Patent Classification (CPC): (Cont.)

C-Sets
**C08L 63/00, C08L 63/04;**
**C08L 63/00, C08L 63/04, C08K 3/36**

**Description**

Field of the invention

The present invention relates to a multi-component epoxy resin system comprising an epoxy resin mixture and a hardener, and to the use of the multi-component epoxy resin system as an adhesive, such as in the chemical fastening of construction elements.

Background to the invention

Adhesives and fillers find use across many technical fields, such as construction, consumer goods, and electronics. These formulations provide means of securely fastening surfaces together.

Epoxy resins are often used as a component of a filler or a glue product. Epoxy resins often comprise both liquid resin and hardener components that are mixed before use. This provides a workable and/or pourable product that later hardens into its final cured state.

Epoxy resins can also comprise additives. These additives can affect the properties of the resins such as the cure time, gel time, bond strength, shrinkage, weather resistance, and tensile strength. Such additives may be known as thickeners, thinners, promotors, fillers, crosslinkers, wetting agents, modifiers, accelerators, dyes, and/or adhesion modifiers. However, many additives can reduce the chemical resistance of a resin. Common additives, such as benzyl alcohol, are volatile compounds (VOC or SVOC) which are not incorporated into the resin matrix during curing and thus lead to emissions.

Traditionally cement-based mortars have been used as common adhesives and fillers for construction. These mortars typically comprise a mineral aggregate, a binder that comprises cement or lime, and water. When mixed, cements are a paste that can be applied to a surface. The cement will gradually set into a hardened state. Epoxy resins can be used in combination with, or to replace traditional cement. Epoxy resin mortar formulations find use in filling gaps, cracks, and vents, and in the instillation of tiles, bricks, and rebar. Epoxy resin formulations are easy to mix, provide very high strength, and are incredibly weather resistant. For these reasons they may be preferred to traditional cement mortars.

The provision of adhesives and fillers with properties suitable for a range of uses is therefore of commercial importance. The following invention has been devised with this in mind.

Summary of the invention

According to a first aspect of the invention there is provided a multi-component epoxy resin system comprising an epoxy resin mixture and a hardener, wherein the epoxy resin mixture comprises :

(i) a first epoxy resin component comprising a bisphenol A- and/or a bisphenol F-based epoxy resin;
(ii) a second epoxy resin component comprising a novolac epoxy resin;
(iii) at least one viscosity modifier; and
(iv) a filler.

According to a second aspect of the invention there is provided an epoxy resin mixture comprising:

(i) a first epoxy resin component comprising a bisphenol A- and/or a bisphenol F-based epoxy resin;
(ii) a second epoxy resin component comprising a novolac epoxy resin;
(iii) at least one viscosity modifier; and
(iv) a filler.

According to a third aspect of the invention there is provided a hardener for a multi-component epoxy resin system, the hardener comprising:

(a) a curing agent comprising an aliphatic amine and at least one of a cycloaliphatic amine and an epoxy-amine adduct;
and
(b) a filler.

According to a fourth aspect of the invention there is provided a kit comprising a multi-component epoxy resin system according to the first aspect of the invention. The multi-component epoxy resin system may be contained within a two-compartment cartridge.

According to a fifth aspect of the invention there is provided a cured epoxy resin composition obtained from the multi-component epoxy resin system according to the first aspect of the invention, following mixing of the epoxy resin mixture with the hardener and curing thereof.

According to a sixth aspect of the invention, there is provided a method of bonding an element to a substrate using the multi-component epoxy resin system according to the first aspect of the invention, the method comprising:

(i) mixing the epoxy resin mixture with the hardener to obtain a mixed composition;
(ii) applying the mixed composition to at least one of the element and the substrate;
(iii) joining the element to the substrate; and
(iv) allowing the mixed composition to cure.

According to a seventh aspect of the invention, there is provided a method of securing an element (e.g. a structural or reinforcing element) in a substrate using the multi-component epoxy resin system according to the first aspect of the invention, the method comprising:

(i) forming a hole in a substrate;
(ii) mixing the epoxy resin mixture with the hardener to obtain a mixed composition;
(iii) introducing the mixed composition into the hole;
(iv) inserting the element into the hole containing the mixed composition; and
(v) allowing the mixed composition to cure.

Embodiments of the invention will now be described with reference to the Figures, in which:

Figure 1 is a graph showing the particle size distribution of a rough filler and a distributed filler;
Figure 2 is a graph showing the performances of five resin formulations. The figure shows for M12 studs, the final bond strength (R1), short curing time bond strength as a proportion of final bond strength (B5(7h)/R1), and the wet hole bond strength as a proportion of final bond strength (B7/R1) for each resin tested;
Figure 3 shows an overlay contour plot comparing ten resin formulations using different mixtures of three silanes. The white area represents the optimum resin based on gel time (tg), wet hole performance (B7), and short curing time bond strength (B5 7h);
Figure 4 is a graph showing the performances of five resin formulations. The figure shows the bond strength (R1) for M12 studs, short curing time bond strength as a proportion of final bond strength (B5(7h)/R1), wet hole bond strength performance (B7), and bond strength of Ø25 post installed rebars as a proportion of final bond strength (PIR Ø25/R1) for each resin;
Figures 5a to 5g are a series of images showing the process of drilling and filling a hole according to the testing methods described herein;
Figure 6 shows the characteristic bond strength in uncracked concrete from -40°C to +40°C of a cured epoxy resin composition of the invention compared to other cured epoxy resin compositions;
Figure 7 shows the characteristic bond strength in uncracked concrete from -40°C to +60°C of a cured epoxy resin composition of the invention compared to other cured epoxy resin compositions;
Figure 8 shows the characteristic bond strength in uncracked concrete from -40°C to +80°C of a cured epoxy resin composition of the invention compared to other cured epoxy resin compositions;
Figure 9 shows the characteristic bond strength in cracked concrete from -40°C to +40°C of a cured epoxy resin composition of the invention compared to other cured epoxy resin compositions; and
Figure 10 shows the characteristic bond strength in cracked concrete from -40°C to +80°C of a cured epoxy resin composition of the invention compared to other cured epoxy resin compositions.

## Detailed description

The present invention provides a multi-component epoxy resin system comprising an epoxy resin mixture and a hardener.

The invention further provides an epoxy resin mixture which is suitable for use in a multi-component epoxy resin system.

The epoxy resin mixture (component A) of the first or second aspect of the invention comprises :

(i) a first epoxy resin component comprising a bisphenol A- and/or a bisphenol F-based epoxy resin;
(ii) a second epoxy resin component comprising a novolac epoxy resin;
(iii) at least one viscosity modifier;; and

(iv) a filler.

For the purposes of the invention, the term "epoxide (or epoxy) resin" denotes a compound or a combination of two or more compounds bearing at least one, preferably at least two, reactive epoxide (oxirane) groups. Said resins preferably have on average at least 1.5 polymerizable epoxide groups per molecule, and even more preferably two epoxide groups per molecule. The epoxide resins may comprise linear polymers having terminal epoxides (for example a diglycidyl ether of a polyoxyalkylene glycol), polymers having oxirane units (for example polybutadiene polyepoxide) and polymers having pendant epoxides (for example a polymer or copolymer of glycidyl methacrylate). The epoxide resins may be pure compounds but are generally combinations of two or more compounds containing one, two or more epoxide groups per molecule. The "mean" number of epoxide groups per molecule is determined by dividing the total number of epoxide groups in the resin by the total number of epoxide compounds present.
The molecular weight of epoxide resins may vary from 50 to 100 000 g/mol or more. For the present invention, the molecular weights of the resins used are advantageously from 50 to 700 g/mol.
The first epoxy resin component comprises a bisphenol A-based epoxy resin, a bisphenol F-based epoxy resin or a bisphenol A/F-based epoxy resin (i.e. a bisphenol A- and/or a bisphenol F-diglycidyl ether epoxy resin). Thus, the first epoxy resin component comprises bisphenol A diglycidyl ether. As is known in the art, these resins are based on the diglycidyl ethers of bisphenol A, bisphenol F, or bisphenol A/F. (known as 'BADGE' or 'DGEBA') and/or bisphenol F diglycidyl ether (known 'BFDGE' or 'DGEBF'). Such resins are readily available (for example those available under the trade names EPON® 828, EPON® 1004 and EPON® 1010 from Westlake, and DER®-331, DER®-332, DER®-33 and DER®-352 from Olin®). In some embodiments, the first epoxy resin component comprises (or is provided by) DER®-352 or equivalent.
In some embodiments, the first epoxy resin component comprises a bisphenol A-based epoxy resin and a bisphenol F-based epoxy resin. This type of mixture with a large molecular weight distribution in particular makes it possible to lower the melting points/crystallization temperatures and avoid crystallization phenomena which may arise, even sometimes at room temperature, with the bisphenol A epoxy resin alone, in particular.
In some embodiments, the first epoxy resin component is present in an amount of from 20 to 60 wt%, from 30 to 60, from 40 to 55 wt% or from 45 to 50 wt% of the epoxy resin mixture.
The second epoxy resin component comprises or consists of a novolac epoxy resin. Suitable compositions comprising such resins are readily available (for example those available under the trade names DLVNE® 59 and DLVNE® 61 from Olin, as well as YDPN-628 (Kukdo) and YDF (Aditya Birla)). In some embodiments, the second epoxy resin component comprises (or is provided by) DLVNE® 61.
In some embodiments, the novolac epoxy resin is present in an amount of from 5 to 20 wt%, from 8 to 15 wt% or from 10 to 12 wt% of the epoxy resin mixture.
The novolac epoxy resin advantageously provides improved rigidity and robustness, and facilitates conversion (i.e. curing) at ambient temperatures.
The epoxy resin mixture comprises at least one viscosity modifier. In some embodiments, the epoxy resin mixture comprises two, three, four or more viscosity modifiers. In some embodiments, the epoxy resin mixture comprises two viscosity modifiers.
The at least one viscosity modifier may comprise an epoxy functional reactive diluent, an acrylate, or a combination thereof.
The viscosity modifier may be present in the epoxy resin mixture in an amount of from 2 to 20 wt%, from 3 to 18 wt%, from 4 to 15 wt%, from 5 to 10 wt%, from 6 to 9 wt% or from 7 to 8 wt% of the epoxy resin mixture.
Epoxy functional reactive diluents are particularly useful as viscosity reducers for epoxy resins. Their relatively unhindered molecular structure and low molecular weight make it possible for them to play an effective role in diluting epoxide resins, while becoming incorporated in the network formed during the addition reaction by virtue of the presence of at least one reactive epoxide ring.
The epoxy functional reactive diluent may have a viscosity of the order of 1 to 200 mPa.s, at 25 degrees centigrade according to ISO 3219, preferably 1 to 20 mPa.s.
In some embodiments the epoxy functional reactive diluent comprises a glycidyl ether, a diglycidyl ether, a triglycidyl ether, a glycidyl ester, a diglycidyl ester, a triglycidyl ester, or any combination thereof.
In some embodiments the epoxy functional reactive diluent comprises a monofunctional epoxy monomer (e.g. a glycidyl ether or a glycidyl ester). It has been found that the inclusion of a monofunctional epoxy monomer helps to compensate for the high viscosity conferred by the novolac epoxy resin at low temperature, and improves mechanical behaviour of the resin, especially when cured at low temperature, without reducing gel time or conversion.
In some embodiments the epoxy functional reactive diluent comprises a diglycidyl ether and a glycidyl ester.
In some embodiments, the epoxy functional reactive diluent comprises hexanediol diglycidyl ether, 1,4-butanediol diglycidyl ether, 1,4-cyclohexanedimethanol diglycidyl ether, resorcinol diglycidyl ether, cyclohexanedimethanol diglycidyl ether, neopentyl glycol diglycidyl ether, dodecyl glycidyl ether or tetradecyl glycidyl ether, trimethylolpropane

triglycidyl ether, glycerol-3-poly glycidyl ether, trimethylolpropane polyglycidyl ether or pentaerythritol polyglycidyl ether, or any combination thereof.

In some embodiments, the epoxy functional reactive diluent comprises 1,4-cyclohexanedimethanol diglycidyl ether. In some embodiments the epoxy functional reactive diluent comprises 1,4-cyclohexanedimethanol diglycidyl ether and a glycidyl ester.

Glycidyl esters include glycidyl ester of castor oil acetic ester, 2-ethylhexyl glycidyl ester, octoyl glycidyl ester, isobutyl glycidyl ester, isopentyl glycidyl ester.

The diglycidyl ether (e.g. 1,4-cyclohexanedimethanol diglycidyl ether) may be present in the epoxy resin mixture in an amount of from 2 to 10 wt%, from 3 to 9 wt%, from 4 to 8 wt% or from 5 to 7 wt%.

The glycidyl ester may be present in the epoxy resin mixture in an amount of less than 5 wt%, less than 3 wt%, less than 2.5 wt%, less than 2 wt%, less than 1.5 wt% or less than 1 wt%.

In some embodiments the viscosity modifier comprises an acrylate. In some embodiments the acrylate is trimethylolpropane triacrylate, tricyclodecane dimethanol diacrylate, dipentaerythritol pentaacrylate, triisocyanurate triacrylate, tricyclodecanedimethanol dimethacrylate, 1,6-hexanediol diacrylate, dipropylene glycol diacrylate, ethoxylated bisphenol A diacrylate, polyethylene glycol diacrylate, propoxylated neopentyl glycol diacrylate, tetraethylene glycol diacrylate, triethylene glycol diacrylate, tripropylene glycol diacrylate, 1,3-butylene glycol dimethacrylate, 1,4-butanediol dimethacrylate, 1,6-hexanediol dimethacrylate, ethoxylated bisphenol A dimethacrylate, polyethylene glycol dimethacrylate, tetraethylene glycol dimethacrylate, triethylene glycol dimethacrylate, ethylene glycol dimethacrylate and diethylene glycol dimethacrylate, ethoxylated or propoxylated trimethylolpropane triacrylate, ethoxylated pentaerythritol triacrylate, propoxylated glyceryl triacrylate, trimethylolpropane trimethacrylate, or any combination thereof.

The multi-component epoxy resin system of the invention may comprise at least one adhesion promoter.

In some embodiments, the epoxy resin mixture comprises an adhesion promoter.

In some embodiments, the hardener comprises an adhesion promoter.

In some embodiments, the epoxy resin mixture comprises a first adhesion promoter and the hardener comprises a second adhesion promoter. The first adhesion promoter and the second adhesion promoter may be different.

Suitable adhesion promoters include functionalised silanes, such as epoxy-functionalised silanes (e.g. 3-glycidoxypropyltrimethoxysilane) and amine-functionalised silanes (e.g. 3-aminopropyl triethoxysilane, N-(2-aminoethyl)-3-amino propyltrimethoxysilane, and Bis[3-(trimethoxysilyl)propyl]amine, 3-Aminopropyltrimethoxysilane, N-(2-Aminoethyl)-3-aminopropylmethyldimethoxysilane, 3-Aminopropylmethyldiethoxysilane,N-(n-Butyl)-3-aminopropyltrimethoxysilane, and Bis[3-(triethoxysilyl)propyl]amine.

In some embodiments, the epoxy resin mixture comprises an adhesion promoter which is (i.e. the first adhesion promoter) an epoxy-functionalised silane (e.g. 3-glycidoxypropyltrimethoxysilane and/or 3-Glycidyloxypropyltriethoxysilane). Such silanes are commercially available, for example under the trade names Silquest® A-187, JH-O-187, GENIOSIL GF-80, Dynasylan GLYMO, KBM 403 and Z-6040.

In some embodiments, the hardener comprises an adhesion promoter (i.e. the second adhesion promoter) which is an amino-functionalise silane (e.g. N-(2-aminoethyl)-3-amino propyltrimethoxysilane or Bis[3-(trimethoxysilyl)propyl] amine). Such silanes are commercially available, for example under the trade names Geniosil® GF-93, JH-A112 and JH-A117.

Surprisingly, the inventors have observed that the inclusion of two different silanes, one being an epoxy-functionalised silane and one being an amine-functionalised silane, leads to increased bond strength.

The adhesion promoter may be present in the epoxy resin mixture in an amount of from 0 to 4 wt%, from 0.3 to 3 wt%, from 0.5 to 2.5 wt%, from 0.8 to 2.0 wt%, from 1.0 to 1.8 wt% or from 1.2 to 1.5 wt% (e.g. from 0 to 1.5 wt% or from 0.5 to 1.5 wt%).

The epoxy resin mixture comprises a first filler. Fillers may help to reduce the phenomenon of shrinkage of the composition which may occur during polymerization. Fillers make it possible, in composite materials, to provide structure by increasing the moduli of the thermosetting or thermoplastic matrices. They are also used to reduce the cost of the composition since fillers replace a portion of the more costly components of the adhesive composition. Generally speaking, the filler is an inert, inorganic, solid and particulate compound. Inert is intended to mean that the filler does not negatively interact with any other component of the composition. Examples of suitable fillers include, without being limited thereto, ground glass, glass beads, quartz, silica, limestone, alumina, various clays, diatomaceous earth and other materials such as mica, silex powder, kryolite, alumina trihydrate, talc, sand, pyrophyllite, barium white, granulated polymers such as polyethylene, hollow glass and polymer beads, zinc oxide, novaculite, calcium sulfate and mixtures thereof.

In some embodiments, the first filler comprises or substantially consists of silica (silicon dioxide).

The epoxy resin mixture may comprise a first filler in an amount of from 10 to 40 wt%, from 15 to 35 wt%, from 20 to 32 wt%, from 22 to 30 wt%, from 25-29 wt% or from 26 to 28 wt% of the epoxy resin mixture.

It will be appreciated that the size of particles of the filler will depend on the desired consistency of the composition and on the process for dispensing the adhesive composition. For example, fillers having a high mean particle size (500 pm

(microns) and above) may clog the static mixers which are used in dispensing systems such as pistols. On the other hand, fillers having a large particle size may be used in glass capsules. In particular, in cases in which a filler is used to prevent the deposition and separation of other particles in a composition, for the sake of promoting the correct flow of all the components simultaneously and homogeneously, it is preferred to use different sizes of fillers, the smallest (finest) being interspersed between the coarsest, according to the principle of particle size compaction.

In some embodiments, the first filler comprises a range of average (mean) particle diameters of from 1 to 500 μm (microns), from 5 to 450 microns, from 10 to 400 microns or from 20 to 350 microns.

In some embodiments, the first filler comprises or consists of particles having an average (mean) diameter of less than 400 μm.

In some embodiments, from 15 to 40 % (e.g. from to 35 %, or from 25 to 30 %) of particles of the first filler have an average (mean) particle diameter of less than 100 μm, from 15 to 40 % (e.g. from 20 to 35 %, or from 25 to 30 %) have an average particle diameter of from 100 to 200 μm, and from 30 to 50 % (e.g. from 35 to 45 %, or from 38 to 42 %) have an average particle diameter of more than 200 μm. Optionally, from 3 to 10 % (e.g. from 2 to 8%, or from 3 to 5 %) of particles of the first filler have an average (mean) particle diameter of from 10 to 20 μm. Optionally, the first filler comprises no particles with an average particle diameter of less than 10 μm.

In some embodiments the first filler comprises or consists of particles having an average (mean) diameter in each of the following size categories: 400-315 μm, 314-250 μm, 249-200 μm, 199-160 μm, 159-125 μm, 124-100 μm, 99-80 μm, 79-50 μm, 49-20 μm, and <19 μm. Optionally the proportion of particles within each category makes up no more than 20 % by weight of the total filler.

For example, a distributed filler having a range of particle sizes as indicated in Figure 1 may be used as the first filler. Thus, in some embodiments, the first filler is a distributed filler having has a particle size distribution substantially as shown in Figure 1.

Suitable fillers are commercially available, for example under the trade names Silmix® 300+, HN34, HN38, and GA39.

The epoxy resin mixture may further comprise one or more additional components selected from a dispersing agent, an anti-foaming agent, a wetting agent, a stabilizer, a biocide, a thixotropic agent, an accelerator, a catalyst and a pigment, or any combination thereof.

In some embodiments, the epoxy resin mixture comprises a dispersing agent. Suitable dispersing agents include polymers (e.g. branched polyester), and salts thereof. Suitable dispersing agents are available under the trade names DYSPERBYK® 2152, BYK® W969 and BYK® 9076.

In some embodiments the dispersing agent comprises an alkylammonium salt of a co-polymer, such as an alkylammonium salt of a high-molecular weight co-polymer (e.g. BYK® 9076).

The principle of the dispersing agent such as those described herein is to increase compatibility and wetting of mineral substrates (e.g. fillers or fibres), consequently providing more compatibility between organic and inorganic components, and between the resin matrix and fillers or the substrate (e.g. concrete). The dispersing agent is also believed to provide improved homogeneity and physical stability over time.

The dispersing agent may be present in an amount of from 0.2 to 1 wt%, from 0.3 to 0.8 wt% or from 0.4 to 0.6 wt% of the epoxy resin mixture (e.g. about 0.5 wt%, or about 0.45 wt%).

Suitable anti-foaming agents are available under the trade names BYK® 1794 and SILCO AF 700 from SILCONA.

In some embodiments, the anti-foaming agent is BYK® 1794.

The anti-foaming agent may be present in an amount of from 0.1 to 0.5 wt%, from 0.15 to 0.4 wt%, or from 0.2 to 0.3 wt% of the epoxy resin mixture.

Thixotropic agents may cause the composition to become more fluid, i.e. less viscous, when it is subjected to shearing forces. The use of a thixotropic agent in the epoxy resin mixture and/or in the hardener part B may help to provide: a viscosity level and thixotropy properties that are compatible with the respective packaging operations of each of the resin and hardener parts of the composition. The product must be able to flow in an entirely controlled manner, under the pressure of the dosing pump, in order to dispense the precise volume of material into each resin and hardener container; and good physical storage stability, by limiting, by virtue of Van der Waals interactions, the sedimentation of the various solid components of the composition. In addition, the presence of the thixotropic agent makes it possible to reduce the extrusion force by lowering the level of pressure required to reach the flow threshold without however increasing the viscosity. Furthermore, immediately after application of the composition, the return to the rest state enables the mixture of the composition injected into the hole to rapidly restructure, preventing phenomena of dripping of the product or dropping of bars or rods.

An example of a suitable preferred thixotropic agent is modified fumed silica (e.g. obtained by flame pyrolysis at temperatures of greater than 1500°C), silicon tetrachloride or quartz. Other suitable thixotropic agents include organic clays, mineral or organic fibers (e.g. glass, aramid or polyolefin fibers), or organic waxes such as amide waxes.

Suitable thixotropic agents are available under the trade names Cab-O-sil®, Aerosil®, WACKER and ORISIL.

The thixotropic agent may be present in an amount of from 1 to 5 wt%, or from 2 to 4 wt% of the epoxy resin mixture, e.g. about 2.8 wt%, about 3 wt%, or about 3.2 wt%.
A pigment may be used to colour the epoxy resin mixture and/or the hardener. Suitable pigments are known to those skilled in the art, such as carbon black, iron oxide, chromium (III) oxide and titanium dioxide. In some embodiments the pigment comprises or consists of titanium dioxide.
The pigment may be present in an amount of from 0.05 to 0.5 wt%, or from 0.1 to 0.4 wt% of the epoxy resin mixture, e.g. about 0.13 wt%.
In some preferred embodiments, the epoxy resin mixture comprises:

(i) a bisphenol A and/or F-based epoxy resin;
(ii) a novolac resin;
(iii) a first viscosity modifier, optionally comprising a diglycidyl ether (e.g. 1,4-cyclohexanedimethanol diglycidyl ether);
(iv) a second viscosity modifier, optionally comprising a glycidyl ester;
(v) optionally, an adhesion promoter comprising an epoxy-functionalized silane;
(vi) a filler.

In some embodiments, the epoxy resin mixture further comprises:

(vii) a dispersing agent, optionally an alkylammonium salt of a co-polymer;
(viii) an anti-foaming agent;
(ix) a thixotropic agent; and/or
(x) a pigment.

The invention further provides a hardener which is suitable for use in a multi-component epoxy resin system.
The hardener of the first or third aspect of the invention comprises:

(a) a curing agent comprising an aliphatic amine and at least one of a cycloaliphatic amine and an epoxy-amine adduct;
(b) optionally, an accelerator;
(c) optionally, an adhesion promoter; and
(d) a filler.

The curing agent comprises a mixture of an aliphatic amine and at least one of a cycloaliphatic amine and an epoxy-amine adduct. In some embodiments, the curing agent comprises a mixture of a cycloaliphatic amine, an aliphatic amine and an epoxy-amine adduct. Advantageously, this combination achieves a balance of high rigidity to the final cured resin, while at the same time providing high reactivity and reaction conversion. Without being bound by theory, it is believed that the amine adduct provides a high crosslinking density and, consequently, high performance of the resulting cured resin. The adduct also facilitates the physical stability of the composition, and helps to avoid low molecular weight molecules eluting from the mixture. The aliphatic amine is highly reactive and promotes reaction conversion. The cycloaliphatic amine is also reactive, contributing to good conversion, as well as providing rigidity by virtue of the cyclic structure.
In some embodiments the cycloaliphatic amine is selected from: 1,3-cyclohexylenebis(methylamine) (BAC), m-xylylenediamine (xMDA); norbornane diamine, bis(4-aminophenyl)methane; benzylamine, 1,2-diaminocyclohexane; 1,4-diaminocyclohexane, bis(4-aminocyclohexyl)methane, bis(4-amino-3-methylcyclohexyl)methane, 2,2-bis(4-aminocyclohexyl)propane, 3-aminomethyl-3,5,5-trimethylcyclohexylamine (isophorone diamine), and any combination thereof.
In some embodiments the cycloaliphatic amine is selected from 1,3-cyclohexylenebis(methylamine) (BAC), m-xylylenediamine (xMDA), and a combination thereof.
The cycloaliphatic amine may be present in the hardener in an amount of from 5 to 30 wt%, from 8 to 25 wt%, from 10 to 23 wt%, from 12 to 20 wt% of the hardener.
In some embodiments, the hardener comprises 1,3-cyclohexylenebis(methylamine) (BAC) in an amount of from 5 to 30 wt%, from 8 to 25 wt%, from 10 to 20 wt% or from 12 to 18 wt% (e.g. from 13 to 20 wt%) of the hardener.
Additionally or alternatively, the harder may comprise m-xylylenediamine (xMDA) in an amount of no greater than 10 wt%, no greater than 8 wt%, no greater than 5 wt% or no greater than 3 wt% of the hardener. For example, the m-xylylenediamine (xMDA) may be present in an amount of from 0.5 to 5 wt% or from 1 to 3 wt% of the hardener.
In some embodiments the aliphatic amine is selected from trimethylhexamethylenediamine, diethylenetriamine, triethylenetriamine, propane-1,3-diamine, 2,2-dimethyl-1,3-propanediamine (neopentanediamine), hexamethylenediamine, bis(3-aminopropyl)amine; N,N-bis(3-aminopropyl)methylamine, tetraethylenepentamine, pentaethylenehexamine, 2,2,4-trimethylhexane-1,6-diamine, and any combination thereof.

In some embodiments the aliphatic amine is 2,2,4-trimethylhexane-1,6-diamine.

The aliphatic amine may be present in the hardener in an amount of from 2 to 20 wt%, from 5 to 15 wt% or from 7 to 13 wt% of the hardener.

In some embodiments the epoxy-amine adduct comprises the reaction product of:

(a) a bi-functional epoxy component; and
(b) an amine component.

In some embodiments the bi-functional epoxy component is bisphenol A diglycidyl ether (DGEBA) or bisphenol F diglycidyl ether (DGEBF) As is known in the art, DGEBA can be obtained from the reaction of 4,4-(propane-2,2-diyl) diphenol (bisphenol A) and 1-chloro-2,3-epoxypropane (epichlorhydrin).

The epoxy-amine adduct may be present in an amount of from 1 to 20 wt%, from 2 to 18 wt%, from 3 to 15 wt% or from 5 to 10 wt% of the hardener (e.g. from 3 to 10 wt%).

In some embodiments the amine component is a primary amine or a secondary amine. Suitable amines include 1,3-cyclohexylenebis(methylamine) (BAC), m-xylylenediamine (xMDA); norbornane diamine, bis(4-aminophenyl) methane, benzylamine, 1,2-diaminocyclohexane, 1,4-diaminocyclohexane, bis(4-aminocyclohexyl)methane, bis(4-amino-3-methylcyclohexyl)methane, 2,2-bis(4-aminocyclohexyl)propane, and 3-aminomethyl-3,5,5-trimethylcyclohexylamine. In some embodiments the amine component is phenylenebis(methylamine) (e.g. m-phenylenebis(methylamine)).

The amine component may be used in molar excess compared to the difunctional epoxy or up to a maximum molar ratio of 1:1. This ensures that the resulting adduct comprises unreacted amine. Because this component is still reactive, it brings various benefits to formulations due such as ease of use, better stability overtime, and high crosslink density.

In some embodiments the curing agent is present in an amount of from 40 to 80 wt%, from 50 to 75 wt% or from 60 to 70 wt%, of the hardener.

Suitable curing agents are commercially available, for example those sold under the trade names ANCAMINE 2719, EPAMINE PC 2002, DEH®630, NORBORNANE DIAMINE, ANCAMINE 2422.

The adhesive composition of the present invention can be cured more easily and more quickly by adding one, or a mixture of at least two, accelerators or activating agents.

An accelerator may be present in the epoxy resin mixture, in the hardener, or in both the epoxy resin mixture and the hardener. In some embodiments the epoxy resin mixture comprises a first accelerator and the hardener comprises a second accelerator. The first and second accelerators may be the same, or they may be different.

Representative accelerators may contain substituted (or modified) phenolic compounds, sulfonic acids, salicylic acids, tertiary amines, linear aliphatic amines that are not adducts with an epoxide compound, compounds containing the imidazole functionality, or compounds containing a toluidine functionality.

The accelerator may therefore be selected from styrenated phenol, resorcinol, salicylic acid, acetylsalicylic acid, 2-piperazin-I- ethylamine, para-toluenesulfonic acid, esters of sulfonic acid such as methyl-4- toluenesulfonate, bis(dimethylaminoethyl)piperazine, N,N'-dimethylpiperazine, dimethylaminomethylphenol, 2,4,6-tris(dimethylaminomethyl) phenol, 2,4,6-tris((3- (dimethylamino)propyl)aminomethyl)phenol, 1-methylimidazole, 1-ethylimidazole, 1-vinylimidazole, 2-methylimidazole, 2-ethylimidazole, 2-isopropylimidazole, heptadecylimidazole, 2-ethyl-4-methylimidazole, 1-benzyl-2-methylimidazole, N,N-dimethylaniline, N,N-dimethyl-o-, -m-, -p-toluidine, N,N-diethylaniline, N,N-diethyl-o-, -m-, -p-toluidine, N,N-di(2-hydroxyethyl)-p-toluidine, N,N-bis(2-hydroxyethyl)-p-toluidine, N,N-bis(2-hydroxypropyl)-p-toluidine or any combination thereof.

In some embodiments, the accelerator comprises a tertiary amine (e.g. 2,4,6-tris(dimethylaminomethyl)phenol, 2-piperazin-1-ethylamine, benzyldimethylamine, Triethanolamine), a sulfonic acid or an ester thereof (e.g. para-toluenesulfonic acid, methyl-toluenesulfonate), and/or salicylic acid.

In some embodiments the accelerator comprises or consists of salicylic acid.

The accelerator (e.g. salicylic acid) may be present in an amount of from 1 to 20 wt%, from 2 to 18 wt%, from 3 to 15 wt% or from 5 to 10 wt% of the hardener.

In some embodiments, the hardener comprises an adhesion promoter.

In some embodiments the adhesion promoter comprises an amine functionalised silane.

The amine functionalised silane may be selected from 3-aminopropyl triethoxysilane, bis[3-(trimethoxysilyl) propyl]amine, 3-Aminopropyltrimethoxysilane, N-(2-Aminoethyl)-3-aminopropyltrimethoxysilane, N-(2-Aminoethyl)-3-aminopropylmethyldimethoxysilane, 3-Aminopropylmethyldiethoxysilane, N-(n-Butyl)-3-aminopropyltrimethoxysilane, 3-Ureidopropyltriethoxysilane, Bis[3-(triethoxysilyl)propyl]amine, and any combination thereof.

In some embodiments the amine functionalised silane comprises two silane moieties, for example bis[3-(trimethoxysilyl)propyl]amine, Bis[3-(triethoxysilyl)propyl]amine, 3-aminopropyltrimethoxysilane, N-(2-aminoethyl)-3-aminopropylmethyldimethoxysilane, 3-aminopropylmethyldiethoxysilane, N-(n-Butyl)-3-aminopropyltrimethoxysilane, and Bis[3-(triethoxysilyl)propyl]amine.

In some embodiments the amine functionalised silane is bis[3-(trimethoxysilyl)propyl]amine.

The amount of the adhesion promoter (e.g. an amine functionalised silane such as bis[3-(trimethoxysilyl)propyl]amine) present in the hardener may be from 0.25 wt% to 1.5 wt%, from 0.5 wt% to 1.3 wt%, from 0.7 wt% to 1.2 wt% or from 0.9 wt% to 1.1 wt% (e.g. from about 0.25 to about 0.85 wt%).

The hardener component comprises a second filler. The second filler may be the same as the first filler present in the epoxy resin mixture, or the first and second fillers may be different. I

In some embodiments, the second filler comprises or substantially consists of silica (silicon dioxide).

In some embodiments, the second filler comprises or consists of particles having an average (i.e. mean) diameter of less than 400 μm.

In some embodiments, from 15 to 40 % (e.g. from to 35 %, or from 25 to 30 %) of particles of the second filler have an average (mean) particle diameter of less than 100 μm, from 15 to 40 % (e.g. from 20 to 35 %, or from 25 to 30 %) have an average particle diameter of from 100 to 200 μm, and from 30 to 50 % (e.g. from 35 to 45 %, or from 38 to 42 %) have an average particle diameter of more than 200 μm. Optionally, from 3 to 10 % (e.g. from 2 to 8%, or from 3 to 5 %) of particles of the second filler have an average (mean) particle diameter of from 10 to 20 μm. Optionally, the second filler comprises no particles with an average particle diameter of less than 10 μm.

In some embodiments the second filler comprises or consists of particles having an average (mean) diameter in each of the following size categories: 400-315 μm, 314-250 μm, 249-200 μm, 199-160 μm, 159-125 μm, 124-100 μm, 99-80 μm, 79-50 μm, 49-20 μm, and <19 μm. Optionally the proportion of particles within each category makes up no more than 20 % by weight of the total filler.

In some embodiments, the second filler is a distributed filler having a particle size distribution substantially as shown in Figure 1.

The amount of second filler present in the hardener may be from 10 to 40 wt%, from 15 to 35 wt%, or from 20 to 30 wt%.

The hardener may further comprise one or more additional components selected from a dispersing agent, an anti-foaming agent, a wetting agent, a stabilizer, a biocide, a thixotropic agent, a catalyst and a pigment, or any combination thereof.

In some embodiments the hardener further comprising a dispersing agent (also referred to as a wetting agent). Suitable dispersing agents include polymers (e.g. branched polyester), and salts thereof. Suitable dispersing agents are available under the trade names DYSPERBYK® 2152, BYK® W969 and BYK® 9076.

In some embodiments, the epoxy resin mixture comprises a first dispersing agent and the hardener comprises a second dispersing agent. The first and second dispersing agents may be the same, or they may be different.

In some embodiments the dispersing agent comprises an alkylammonium salt of a co-polymer, such as an alkylammonium salt of a high-molecular weight co-polymer (e.g. BYK® 9076).

The dispersing agent may be present in an amount of from 0.01 to 2 wt%, from 0.05 to 1 wt%, from 0.1 to 1 wt% or from 0.2 to 0.5 wt% of the hardener.

In some embodiments the hardener comprises a rheology modifier. Suitable rheology modifiers include polyamides, wax or hydrogenated castor oil. Suitable rheology modifiers for use in the invention are commercially available, such as those sold under the brand names CRAYVALLAC® ULTRA, KT6900, THIXATROL ST, CRAYVALLAC SLT, and CRAYVALLAC OPTIMA.

In some embodiments the rheology modifier is present in an amount of from 0.01 to 2 wt%, from 0.05 to 1 wt%, from 0.1 to 1 wt% or from 0.2 to 0.5 wt% of the hardener.

In some embodiments the hardener comprises a thixotropic agent. Suitable thixotropic agents for inclusion in the hardener are described above.

The thixotropic agent may be present in an amount of from 1 to 8 wt%, from 2 to 7 wt% or from 3 to 6 wt% of the hardener.

A pigment may be used to colour the hardener. Suitable pigments are known to those skilled in the art, such as carbon black, iron oxide, chromium (III) oxide, titanium dioxide and organic pigments.

The pigment may be present in an amount of from 0.05 to 2 wt%, or from 0.1 to 1 wt% of the hardener, e.g. about 0.5 wt%.

In some embodiments the hardener further comprises at least one alcohol. Suitable alcohols include styrenated phenol, hexadecanol, lauryl alcohol, tetradecanol, and any combination thereof.

In some embodiments the hardener comprises styrenated phenol. The styrenated phenol may be present in an amount of from 5 to 25 wt%, or from 10 to 20 wt%.

In some preferred embodiments, the hardener comprises:

(i) a curing agent comprising a cycloaliphatic amine (e.g. BAC and/or xMDA), an aliphatic amine (e.g. 2,2,4-trimethylhexane-1,6-diamine), and an epoxy-amine adduct;
(ii) an accelerator comprising salicylic acid;

(iii) an adhesion promoter comprising an amine functionalised silane;
(iv) a filler.

In some embodiments, the epoxy resin mixture further comprises:

(v) a dispersing agent;
(vi) a rheology modifier;
(vii) a thixotropic agent; and/or
(viii) a pigment.

In some embodiments, the multi-component epoxy resin system has a volatile organic compound (VOC) content of no greater than 100 g/L, no greater than 90 g/L, no greater than 80 g/L, no greater than 70 g/L or no greater than 60 g/L.

A VOC is herein defined as an organic compound that has a high vapour pressure, specifically having a vapour pressure of 0.01 kPa or more at 293.15 K.

Conveniently, the multi-component epoxy resin system of the invention may be suitable for use in a temperature range of from -5 °C to +40 °C, from 0 °C to +40 °C or from +5°C to +40 °C.

In some embodiments, the multi-component epoxy resin system of the invention has a limited performance reduction at 60°C with a bond strength value at 60°C of not less than 75% of the reference bond strength at 20°C. In some embodiments, the multi-component epoxy resin system of the invention has a limited performance reduction at 80°C with a bond strength value at 80°C of not less than 45% of the reference bond strength at 20°C.

The invention further provides a kit comprising a multi-component epoxy resin system as described herein contained within a two-compartment cartridge.

In some embodiments, the kit further comprises an applicator. The applicator may be adapted to extrude the epoxy resin mixture and the hardener from their respective compartments of the cartridge. The applicator may be manual, electric or pneumatic.

In some embodiments the kit further comprises a static mixer. The static mixer may be adapted to dispense a paste which is a homogeneous mixture of the epoxy resin mixture and the hardener component, in a stoichiometric ratio.

The kit may further comprise instructions for use.

The invention further provides the use of a multi-component epoxy resin system as described herein as an adhesive. For example, the multi-component epoxy resin system of the invention may be used for securing in a substrate one or more structural or reinforcing elements, such as anchoring threaded rods or studs, e.g. threaded rods or studs intended to support heavy loads in support materials. The multi-component epoxy resin system of the invention may also find use in anchoring concrete reinforcers, such as post installed rebars, or rebars.

An adhesive composition according to the invention may be obtained by a reaction between the epoxy resin mixture (part A) and the hardener (part B). The adhesive composition may be prepared by mixing the epoxy resin mixture and the hardener as described in the context of the present invention. When the epoxy resin mixture and the hardener are brought into contact, polymerization takes place.

The epoxy resin mixture may be mixed with the hardener at a epoxy resin mixture : hardener ratio of 1-3 : 1, or 1.5-2.5 : 1, e.g. 2 : 1.

The invention also provides a method of bonding an element to a substrate using the multi-component epoxy resin system as described herein, the method comprising:

(i) mixing the epoxy resin mixture with the hardener to obtain a mixed composition;
(ii) applying the mixed composition to at least one of the element and the substrate;
(iii) joining the element to the substrate; and
(iv) allowing the mixed composition to cure.

The invention also provides a method of securing an element (e.g. a structural or reinforcing element) in a substrate using the multi-component epoxy resin system as described herein, the method comprising:

(i) forming a hole in a substrate;
(ii) mixing the epoxy resin mixture with the hardener to obtain a mixed composition;
(iii) introducing the mixed composition into the hole;
(iv) inserting the element into the hole containing the mixed composition; and
(v) allowing the mixed composition to cure.

The element (e.g. the reinforcing or structural element) may be a rebar, a rod (e.g. a threaded rod), a bolt, an anchor pin, a stud (e.g. a threaded stud) or the like.

The mixed composition may have a working time of at least 15, at least 18, or at least 20 minutes at 20 °C. In some embodiments the mixed composition has a working time of no greater than 30 minutes, no greater than 26 minutes, no greater than 24 minutes or no greater than 22 minutes. The working time (also referred to as the gel time) may be determined using the methods described herein.

It will be appreciated that the mixed composition must be applied or used within the working time. Thus, in some embodiments, the step of applying the mixed composition to at least one of the element and the substrate, or the step of introducing the mixed composition into the hole, is carried out in no greater than 30 minutes, no greater than 26 minutes, no greater than 24 minutes or no greater than 22 minutes.

In some embodiments, the mixed composition has a curing time of less than 10 hours, less than 8 hours, The curing time may be determined using the methods described herein. In some embodiments the mixed composition is allowed to cure for at least 4 hours, at least 5 hours, at least 6 hours, at least 7 hours or at least 8 hours.

The mixed composition is allowed to cure so as to provide a cured composition. In some embodiments, the cured composition has a bond strength of greater than 20, 22, 24 or 25 $N/mm^2$ on concrete. Bond strength may be determined using the methods described herein.

Examples

Materials and methods

Preparation of resins

The epoxy resin mixture (part A) and the hardener (part B) are prepared in two different mixers in order to avoid any contact between the compounds or even their vapors, where appropriate.

Part A: The required amounts of liquid ingredients are first poured in, preferably from the least viscous to the most viscous. Additives are added and homogenized with the other liquid ingredients. Subsequently, the thixotropic agent is incorporated in several steps due to its high volatility and low density. The dispersion step follows, under high shearing up to 1100 revolutions per minute (rpm), under strong vacuum at 0.1 bar. At the end, filler is added and dispersed at speeds of up to 1100 rpm, under strong vacuum at 0.1 bar, enabling the evacuation of any air trapped during the prior steps.

Part B: The required amounts of liquid ingredients are first poured in, preferably from the least viscous ingredient to the most viscous . Additives are added and homogenized with the other liquid ingredients. Subsequently, the thixotropic agent is incorporated in several steps due to its high volatility and low density. The dispersion step follows, under high shearing up to 1100 rpm, under strong vacuum at 0.1 bar. At the end, the filler is added and dispersed at speeds extending up to 1100 rpm, under strong vacuum at 0.1 bar, enabling the evacuation of any air trapped during the prior steps.

Once prepared, parts A and B are poured into a plastic two-component container. Parts A and B are intended to be physically separated and tightly closed with no possible interaction between the Part A and Part B pastes until appropriate use.

Gel time measuring device (TROMBOMAT)

Working time or gel time is related to starting formation of microgels, characterized by the increase of viscosity and the point from which the mixture can no longer be processed. Step by step, microgels coalesce to form macrogels. When curing is completed, the material is a high net density thermoset polymer. A trombomat allows a person to measure the evolution of the rigidity of the mixture as a function of time while controlling the temperature. Gel time may be measured using the method described in ISO 2535 and/or ASTM C881.

Test programs

Table 1 describes a test series for epoxy resins. The test series are further described in the European Assessment document EAD 330499-01-0601: Bonded Fasteners And Bonded Expansion Fasteners For Use In Concrete. Methods of conducting the test series are disclosed herein:

**Table 1**

| Test series | Description | d | Temp (°C) | Curing time (hours) | Drilling method | Cleaning method |
|---|---|---|---|---|---|---|
| R1 | Reference test - Bond strength with confined setup | M12to M30 | 20 | 24 | HD and DD | Premium |

(continued)

| Test series | Description | d | Temp (°C) | Curing time (hours) | Drilling method | Cleaning method |
|---|---|---|---|---|---|---|
| R3 | Reference test - Bond strength in cracked concrete with confined setup | M12 | 20 | 24 | HD | Premium |
| B13 | Crack cycling under load | M12 | 20 | 24 | HD | Premium |
| B4 | Minimum installation temperature | M12 | 20 | 24 | HD | Premium |
| B4 | | M12 | 0 | 48/ 72/ 168 | HD | Premium |
| B4 | | M12 | 5 | 48 | HD | Premium |
| B5 | Minimum curing time at normal ambient temperature | M12 | 20 | 7 | HD | Premium |
| R5(B6/B7) | Reference test at 20xd embedment | M12 to M30 | 20 | 24 | HD | Premium |
| R5(B7) | | M12 | 20 | 24 | DD | Premium |
| B6 | Robustness in dry concrete | M12 to M30 | 20 | 24 | HD | Premium reduced |
| B7 | Robustness in water saturated/wet concrete | M12 to M30 | 20 | 48 | HD | Premium reduced |
| B7 | | M12 | 20 | 48 | DD | Premium reduced |
| B3 | Maximum short-term temperature | M12 | 40 | 24 | HD | Premium |
| B3 | | M12 | 60 | 24 | HD | Premium |
| B3 | | M12 | 70 | 24 | HD | Premium |
| B3 | | M12 | 80 | 24 | HD | Premium |
| B14 | Sustained load at normal ambient temperature | M12 | 20 | 7 | HD | Premium |
| C2.1a | Reference tension load seismic C2 | M12 | 20 | 24 | HD | Premium |
| C2.3 | Functioning under pulsating tension load | M12 | 20 | 24 | HD | Premium |
| C2.5 | Functioning tension load under varying crack width | M12 | 20 | 24 | HD | Premium |

Wherein:
d= diameter of rod
HD= Hammer Drilling method
DD= Diamond Drilling method
Premium cleaning (HD)= Blow twice/ brush twice/ blow twice
Premium reduced cleaning (HD) = Blow once/ brush once/ blow once
Premium cleaning (DD)= Flush with tap water/ Brush twice/ Flush with tap water/ Blow twice
Premium reduced cleaning (DD)= Flush with tap water/ Brush once/ Flush with tap water/ Blow once

An adhesive anchor consisting of a two-component system was provided in unmixed condition in 450 ml cartridges and delivered into a drilled hole at a ratio of Part A:Part B of 2:1. The steel element was placed into the drilled hole filled with the injection mortar and anchored via the bond between the metal part and concrete. The drilling, cleaning and setting procedure is described further below with reference to Figures 5A to 5G.

Bore hole drilling (Figure 5A)

Drill hole with a diameter (do) and depth (ho) with a hammer drill set in rotation-hammer mode using an appropriately carbide drill bit.

Bore hole cleaning (Figure 5B to 5D)

Using compressed air cleaning (minimum 6 bars), use the appropriate extension and air nozzle, starting from the bottom of the hole blown out at least 2 times and until no dust is evacuated. Using the relevant SPIT brush and extension fitted on a drilling machine starting from the top of the hole in rotation, move downward to the bottom of the hole then move upward to the top of the hole. Repeat this operation. Using compressed air cleaning (minimum 6 bars), use the appropriate extension and air nozzle, starting from the bottom of the hole blown out at least 2 times and until no dust is evacuated.

Premium Cleaning method for Hammer drilling technique

1) Insert air nozzle fitted with the relevant plastic extension to bottom of the thole and blow out at least 2 times using oil free compressed air and until no dust is evacuated/
2) Using the relevant brush and extension fitted on a drilling machine, starting from the top of the hole, move downward to the bottom of the hole (duration 5s) then move upward to the top of the hole (duration 5s). Repeat this operation.
3) Insert air nozzle fitted with the relevant plastic extension to bottom of the hole and blow out at least 2 times using oil free compressed air and until no dust is evacuated.

Premium Cleaning method for Diamond core drilling technique

1) Clean the hole tap with water.
2) Using the relevant brush and extension fitted on a drilling machine, starting from the top of the hole, move downward to the bottom of the hole (duration 5s) then move upward to the top of the hole (duration 5s). Repeat this operation.
3) Clean the hole with tap water.
4) Insert air nozzle fitted with the relevant plastic extension to bottom of the hole and blow out at least 2 times using oil free compressed air and until not dust is evacuated.

Injection (Figure 5E to 5F)

Screw the mixing nozzle or static mixer onto the cartridge and dispense the first part to waste until an even colour is achieved for each new cartridge or mixing nozzle. Use tube extension for holes deeper than 250 mm. Starting from the bottom of the hole, fill uniformly. In order to avoid air pockets, withdraw slowly. Fill the hole until ½ full. For holes deeper than 350 mm use a piston plug. Insert the rod or rebar in respect of the gel time of the resin. Remove excess resin from the mouth of the hole before it sets.

Setting the element (Figure 5G)

Do not disturb the anchor before the specified cure time, attached the fixture and tighten the nut at the specified torque.

Tensile testing device

A tensile testing device can measure the maximum pull-out force and displacement of threaded rods previously anchored according to predefined conditions. The mechanical performances in various conditions of curing can be directly evaluated with this equipment which allows one to assess the robustness of a formula. The mean ultimate bond strength ($\tau_{Ru,m}$) value is calculated with the following equation:

$$\tau_{Ru,m} = \frac{F}{S}$$

wherein $\tau$Ru,m is the mean ultimate bond resistance or bond strength, F is the ultimate load, and S is the concrete surface area covered by adhesive in the hole.

As an example of minimum curing time condition, the mechanical conversion is calculated with the ratio of measurements minimum curing time bond strength /24h curing time bond strength:

$$\% \; conversion = \frac{\tau_{Ru,m\,(curing\ time)}}{\tau_{Ru,m\,(24\ h)}}$$

Tension test

All tests were performed according to the procedure described in the guide EAD 330499-01-0601.

The tests were carried out in the concrete slabs with a minimum concrete age of 28 days at the time of testing. The slabs used were made according to according to EN 206-1: 2000-12 and had strength classes from C20/25 to C90/105.

The tension test is done using a confined setup, the test equipment consists of a tubular piston hydraulic jack of 100 kN (or higher whenever necessary) equipped with a load cell. The anchor displacement is measured from 2 displacements sensors.

The applied load and the anchor displacements were recorded simultaneously by using the data acquisition system. The peak loads were reached within 60 seconds to 180 seconds.

Procedures for different test series

R5, B6, B7 with embedment depth at 20d

The drilling, cleaning and installation is done with embedment at 20d by using a test member consisting of 2 concrete blocks A and B stacked on the top of each other without a permanent connection. Then the block A is removed to insert the studs.

The anchorage depth is measured with dial gauge. The measure is taken with the concrete surface as reference.

For test series B7, the concrete is conditioned with water in the hole drilled at 0,5.do during 8 days. Then the water is removed, and the final hole is drilled at the recommended diameter $d_0$.

Test procedure for test series B4

Drill and clean hole according to the manufacturer's product installation instructions (MPII) then cool test member at ambient temperature (21 ± 3°C). The bonding material and embedded part must also be conditioned at ambient temperature during 24 hours before installation. Install the fastener and maintain the temperature of the test member at ambient temperature for the minimum curing time specified by manufacturer. Carry out confined tension test at the end of the curing time.

Test procedure for test series B5

Drill and clean hole according to MPII then cool test member at ambient temperature (21 ± 3°C), also the bonding material and embedded part must be conditioned at ambient temperature during 24 hours before installation. Install the fastener and maintain the temperature of the test member at ambient temperature for the minimum curing time specified by manufacturer. Carry out confined tension test at the end of the curing time.

Test procedure for test series B14

The tests are performed to check the creep behaviour of the loaded fastener at normal ambient temperature (21 ±3°C). The permanent load $N_{sust}$ can be applied by springs during minimum 3 months for life duration 50 years (and 6 months for life duration 100 years).

The preliminary tests have been stopped after 60 days.

Test procedure for test series R3

Install the fastener in the hair line crack, and open the crack at 0,3 mm. The crack width is regularly measure during the test.

Test procedure for test series B13

Crack cycling under load.

Install the fastener in the hair line crack, then a tensile load Np is applied to the fastener after opening the crack to $\Delta_{w1}$ = 0,3 mm. $N_p$ shall remain constant during the crack.

Then the crack is opened and closed 1000 times with frequency around 0,2 Hz, between $\Delta_{w1}$ = 0,3 mm and $\Delta_{w2}$ = 0,1mm.

During the cycles, the displacement of the fastener and the crack width is continuously measured during the test.

After completion of the crack movements, the fastener is unloaded, the displacement measured and a tension test to failure performed with $\Delta_{w1}$ = 0,3 mm

Test procedure for test series C2.1a, C2.3 and C2.5

The seismic tests C21a, C2.3 and C2.5 are performed on a specific device and specific slabs defined according to Annex E of EAD 330499-01-0601.

**Example 1: Effect of novolac**

Multiple test resins were formulated using different percentages of novolac in the liquid resin.

**Results**

The effect of the novolac resin on overall mechanical behavior and reaction conversion was tested. It was found that novolac is important for achieving good mechanical conversion and to increase short-term curing. A higher cross-linking density can be expected which is obtained even at room temperature.

Various compositions were tested to optimize the amount of novolac. As shown in Table 2 and Figure 2, composition P2-5 (16 wt% novolac, based on the liquid components of the composition) provided a high bond strength and conversion ratio.

**Table 2**

| **Resin composition* (liquids)** | **P2-1** | **P2-2** | **P2-3** | **P2-4** | **P2-5** |
|---|---|---|---|---|---|
| NOVOLAC (%) | 65 | 0 | 33 | 49 | 16 |
| DGEBA resin (%) | 0 | 75 | 38 | 19 | 56 |
| DGEBF resin (%) | 0 | 25 | 13 | 6 | 19 |
| Diluents (%) | 35 | 0 | 18 | 26 | 9 |
| Gel time (bath 20 C) | 24’45 | 23’00 | 25’40 | 23’30 | 22’10 |
| Bond strength (τ Ru) wih followinfg conditions: *Stud diameter -M12-Embedment 7xd= 84mm 20°* C | | | | | |
| τ Ru (N/mm$^2$) - 5h | | | | | 30.1 |
| τ Ru (N/mm$^2$) - 7h | 15.0 | 28.9 | 30.8 | 28.8 | 31.1 |
| τ Ru (N/mm$^2$) - 24h | 27.9 | 29.7 | 32.4 | 35.8 | 31.9 |
| 5h conversion | | | | | 94 % |
| 7h conversion | 54 % | 98 % | 95 % | 80 % | 98 % |
| B7 bond strength in wet hole, 24h reduced cleaning, M12, 84 mm embedment | | | | | |
| τ Ru (N/mm$^2$) | 23.7 | 26.5 | 24.9 | 28.9 | 27_9 |
| *Reacted with an amine composition, based on amines and salicylic acid | | | | | |

The optimal amount of novolac resin was then confirmed after adjusting the adhesion promoters present in the epoxy resin mixture and the hardener. The results are shown in Table 3 and Figure 4. Composition P4-3 (16.0 wt% novolac) was found to achieve a good balance of economical and technical properties.

**Table 3**

| **Resin composition * (liquids)** | **P4-1** | **P4-2** | **P4-3** | **P4-4** | **P4-5** |
|---|---|---|---|---|---|
| Novolac (%) | 10 | 13 | 16 | 20 | 23 |
| DGEBA resin (%)<br>DGEBF resin (%) | 64<br>21 | 60<br>20 | 56<br>19 | 52<br>17 | 49<br>16 |
| Diluents (%) | 5 | 7 | 9 | 11 | 12 |
| Gel time (bath 20 C) | 22'15 | 22'15 | 23'00 | 24'00 | 23'50 |
| Bond strength (τ Ru) wih followinfq conditions: *Stud diameter M12-Embedment 7xd= 84mm; T= 20° C*<br>τ Ru (N/mm$^2$) -7h<br>τ Ru (N/mm$^2$) -24h<br>7h Conversion | 32.9<br>34.5<br>95% | 27.1<br>31.8<br>85% | 31.7<br>33.5<br>95% | 31.4<br>34.6<br>91% | 32.6<br>33.7<br>97% |
| B7 bond strength in wet hole, 24h reduced cleaning, M12, 84 mm embedment, 20° C<br>τ Ru (N/mm$^2$) | 29.3 | 25.7 | 28.0 | 26.8 | 29.8 |
| Rebar Ø25, embedment 125mm, 24h, 20°C<br>τ Ru (N/mm$^2$) | 23.2 | 23.3 | 25.0 | 24.7 | 24.2 |
| *Reacted with an amine composition, based on amines and salicylic acid | | | | | |

**Example 2: Effect of glycidyl ester viscosity modifier**

**Table 4**

| **Resin composition * (liquids)** | **A** | **B** | **C** | **D** |
|---|---|---|---|---|
| DGEBA/F(%) | 73 | 67 | 67 | 70 |
| Novolac (%) | 16 | 16 | 16 | 16 |
| Diluent (%) | 8 | 8 | 8 | 8 |
| Pentacrylate (%) | 0 | 2 | 0 | 0 |
| Triacrylate (%) | 0 | 4 | 0 | 0 |
| Glycidyl ester (%) | 0 | 0 | 6 | 3 |
| Viscosity 20 °C | 69000 | 56600 | 35000-40000 | 47200 |
| Gel time at 20 °C | 24'00 | 18'00 | 26'30 | 22'30 |
| High temperature bond strength (B3) 24 h, 80 °C (N/mm$^2$) | 17.1 | 17.9 | / | 19.4 |
| Short curing time bond strength conversion (B5/R1) (τ Ru) wih following conditions: *Stud diameter M12- Embedment 7xd= 84mm; T= 20°C*<br>Mechanical conversion 6 h (%) | 82% | 82% | 86% | 88% |
| Minimum temperature bond strength (B4) 5 C, stud M12, embedment 84 mm<br>(N/mm$^2$)<br>24h<br>48h | 20.0<br>/ | 27.0<br>/ | /<br>/ | 24.3<br>33.3 |

A drastic reduction in viscosity was observed when Part A comprised a glycidyl ester, even at 3wt%. Furthermore, the glycidyl ester has the advantage of not reducing gel time compared to acrylates - in fact, an increase in gel time was observed. Ideally, the gel time is at least 20 minutes at 20 °C.

**Example 3: Effect of functionalised silanes as adhesion promoters**

The effect of various functionalised silanes (shown in Table 5) was investigated by modifying formula D of Table 4. The results are shown in Table 6.

**Table 5**

| | | | |
|---|---|---|---|
| 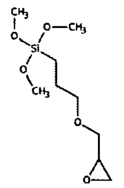 | 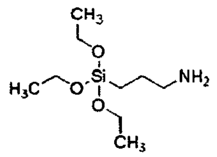 | 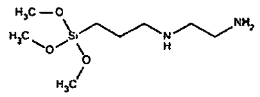 | 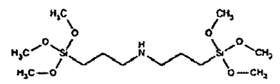 |
| 3-Glycidoxypropyl trimethoxysilane<br>CAS # 2530-83-8 | 3-Aminopropyl Triethoxysilane<br>CAS # 919-30-2 | N-(2-Aminoethyl)-3-aminopropyl-trimethoxysilane<br>CAS # 13822-56-5 | Bis[3-(trimethoxysilyl) pro-pyl]amine<br>CAS # 82985-35-1 |
| GENIOSIL® GF-80<br>SILQUEST® A-187 | GENIOSIL® GF-93 | JH-A112 | JH-A117 |
| Part A | Part B | Part B | Part B |

**Table 6**

| # Formula | E | F | G |
|---|---|---|---|
| Part A (liquids) based on formula D (table 4) | | | |
| DGEBA/F/ Novolac/ Epoxy reactive diluent (%) | 99 | 99 | 99 |
| Silquest A-187 (%) | 1 | 1 | 1 |
| Part B (liquids) | | | |
| Amines composition +accelerator | 97 | 97 | 97 |
| GENIOSIL GF-93 | 3 | | |
| JH-A112 | | 3 | |
| JH-A117 | | | 3 |
| Bond strength (τ Ru) wih followinfg conditions: *Stud diameter M12- Embedment 7xd= 84mm*; *T= 20° C*<br>τ Ru (N/mm$^2$)-7h<br>τ Ru (N/mm$^2$)-24h<br>7h Conversion (%) | 30.1<br>35.1<br>86 % | 13.3<br>18.8<br>70 % | 27.8<br>30.1<br>92 % |
| B7 bond strength in wet hole, 24h, reduced cleaning, M12, 84 mm embedment, 20C<br>τ Ru (N/mm$^2$) | 18.9 | / | 24.4 |

The data in Table 6 highlights the benefits provided by silanes, especially bis[3-(trimethoxysilyl)propyl]amine, both in terms of the reaction conversion and the response in humid holes. These effects may be explained by the presence of the two silane groups in this molecule.

Further studies were carried out to optimize the amount of silanes present in the epoxy resin mixture and in the hardener. The results are shown in Table 7.

**Table 7**

| | | P3-1 | P3-2 | P3-3 | P3-4 | P3-5 | P3-6 | P3-7 | P3-8 | P3-9 | P3-10 |
|---|---|---|---|---|---|---|---|---|---|---|---|
| SILQUEST® A187 | /part A | 1.88 | 0 | 0 | 0.95 | 0.95 | 0 | 0.64 | 1.27 | 0.32 | 0.32 |
| | /parts A+B | 1.31 | 0 | 0 | 0.65 | 0.65 | 0 | 0.440 | 0.878 | 0.219 | 0.219 |
| GENIOSIL® GF93 | /part B | 0 | 4.13 | 0 | 2.11 | 0 | 2.05 | 1.39 | 0.7 | 2.77 | 0.7 |
| | /parts A+B | 0 | 1.31 | 0 | 0.65 | 0 | 0.65 | 0.434 | 0.216 | 0.872 | 0.220 |
| JHA117 | /part B | 0 | 0 | 4.13 | 0 | 2.11 | 2.05 | 1.39 | 0.7 | 0.7 | 2.77 |
| | /parts A+B | 0 | 0 | 1.31 | 0 | 0.65 | 0.65 | 0.434 | 0.216 | 0.220 | 0.872 |
| Gel time (bath 20°C) | | 20'45 | 23'30 | 20'30 | 24'00 | 22'00 | 23'20 | 21'15 | 20'30 | 19'35 | 23'40 |
| Bond strength (τ Ru) wih followinfg conditions: *Stud diameter M12-Embedment 7xd= 84mm; T= 20° C* | | | | | | | | | | | |
| τ Ru (N/mm²) -7h | | 28.5 | 28.5 | 28.4 | 23.9 30.0 | 28.3 | 27.8 | 22.8 29.0 | 28.0 29.0 | 27.9 | 20.0 |
| τ Ru (N/mm²) -24h | | 29.8 | 29.8 | 29.5 | | 29.0 | 29.0 | | | 29.0 | 29.0 |
| 7h Conversion (%) | | 95 % | 95 % | 96 % | 80 % | 97 % | 96 % | 78 % | 96 % | 96 % | 69 % |
| B7 bond strength in wet hole, 24h, reduced cleaning, M12, 84 mm embedment, 20C τ Ru (N/mm²) | | 28.4 | 26.9 | 27.6 | 30.4 | 28.2 | 24.3 | 28.0 | 29.2 | 27.6 | 29.7 |

From this data it is concluded that the optimum amounts of silane adhesion promoters are:

Part A: 1.52 wt% epoxy-functionalised silane (e.g. e.g. 3-glycidoxypropyltrimethoxysilane); and

Part B: 0.85 wt% amine-functionalised silane (e.g. bis[3-(trimethoxysilyl)propyl]amine).

**Example 4: Comparison of accelerators**

Various compositions were tested comprising different accelerators, since one type of accelerator may be more or less suitable depending on the chosen system.

**Results**

The results are shown below in Table 8.

**Table 8**

| | | **Accelerator** | | | |
|---|---|---|---|---|---|
| | | **Salicylic acid** | **CaNi** | **Tetra functional acrylate** | **PTSA (para-toluenesulfonic acid)** |
| **Curing system** | NBDA + phenalkamine | | x | x | x |
| | Cycloaliphatic amine + aliphatic amine + amine adduct | x | | | |
| **Bond strength - M2-TF12-4d 20°C** | τ Ru [N/mm2] at 5h | - | 21.60 | 8.40 | 22.83 |
| | τ Ru [N/mm2] at 7h | 31.03 | 28.78 | 20.80 | 29.73 |
| | τ Ru [N/mm2] at 24h | 33.35 | 33.40 | 33.00 | 34.03 |
| | Conversion 7h | 93 % | 86 % | 63% | 87 % |

The results show that PTSA is the best accelerator in combination with the curing system containing norbonane diamine. However, this system has lower short term performance compared to salicylic acid combined with the curing agent comprising a cycloaliphatic amine, an aliphatic amine and an amine adduct.

**Example 5: Effect of dispersing agent**

Different dispersing agents were tested to determine their effect on the wettability between components and improve global homogeneity of formula. Dispersing agents may also have an effect on the wetting effect of the resin on the concrete surface, such as in a drilled hole. Holes which require large amounts of mechanical locking, such as large holes, may require a resin which is better at wetting the concrete.

**Results**

The results are shown below in Table 9.

**Table 9**

| FORMULA | | P4-3 base (cf. Table 3) | R087-D097 | R088-D097 | R089-D097 |
|---|---|---|---|---|---|
| PART A | Wetting agent | / | hyperbranched polyester | alkylammonium salts of high molecular-weight copolymers (containing hydroxyl groups) | alkylammoniu m salts of high molecular-weight copolymers (no hydroxyl groups) |
| | Granulometry partition | / | Yes | Yes | Yes |
| Rebar Ø25, embedment 125mm, 24h, 20°C | τ Ru ($N/mm^2$) | 25.0 | 26.1 | 25.3 | 26.7 |

It was found that an increase in performance could be obtained using the alkylammonium salts of a high molecular weight copolymer, in particular those not containing hydroxyl groups.

**Example 6: Formulations**

An epoxy resin mixture can be prepared according to the following formulation:

| Component | Quantity (wt%) | Preferred quantity (wt%) |
|---|---|---|
| Bis A/F epoxy resin | 20-60 | 40-55 |
| Novolac epoxy resin | 5-20 | 8-15 |
| First viscosity modifier - diglycidyl ether (e.g. 1,4-cyclohexanedimethanol diglycidyl ether) | 2-10 | 3-9 |
| Second viscosity modifier - glycidyl ester | <2 | <1 |
| Dispersing agent | 0.2-1 | 0.3-0.8 |
| Adhesion promoter (e.g. epoxy-functionalised silane) | 0-4 | 0.1-2.5 |
| Anti-foaming agent | 0.1-0.5 | 0.2-0.3 |
| Thixotropic agent and filler (e.g. fumed silica) | 10-50 | 15-35 |
| Pigment (e.g. $TiO_2$) | 0.05-0.5 | 0.1-0.4 |

A hardener can be prepared according to the following formulation:

| Component | Quantity (wt%) | Preferred quantity (wt%) |
|---|---|---|
| Curing agent comprising:<br>- cycloaliphatic amine (e.g. BAC and mXDA)<br>- an aliphatic amine (e.g. 2,2,4-trimethylhexane-1,6-diamine) and<br>- an amine adduct (e.g. an epoxy-amine adduct) | <br>5-30<br>2-20<br>1-20 | <br>8-25<br>5-15<br>3-15 |
| Accelerator (e.g. salicylic acid) | 1-20 | 3-15 |
| Adhesion promoter (e.g. amine-functionalised silane) | 0.25-1.5 | 0.5-1.0 |
| Dispersing agent | 0.01-2 | 0.05-1 |
| Rheology modifier | 0.01-2 | 0.05-1 |

(continued)

| Component | Quantity (wt%) | Preferred quantity (wt%) |
|---|---|---|
| Curing agent comprising:<br>Thixotropic agent and filler (e.g. fumed silica) | 10-50 | 15-35 |
| Pigment (e.g. organic) | 0.05-2 | 0.1-1 |

**Example 7: Testing of formulations**

A formulation according to example 6 was compared against three comparative products (Comp. 1-3). Characteristic bond strength was measured in cracked and uncracked concrete at three temperature ranges (-40°C to +40°C, -40°C to +60°C, and -40°C to +40°C) using rod diameters of M10, M12, M16, M20, M24, and M30. The results of these tests are shown in Figures 6 to 10.

It was found that the resin of the invention ("New product") provides a bond strength that is at least equal to, and in many cases higher than, the bond strength achieved using the comparative resins, at all temperatures and rod diameters in uncracked concrete.

In cracked concrete, it was found that the resin of the invention ("new product") provided, in all but one test, a bond strength at least equal to, and in some cases higher than, the bond strength achieved using comparative resins. In particular the new resin has a significantly increased bond strength in cracked concrete for M30 rod diameters.

The invention may be defined by the following clauses:

1. A multi-component epoxy resin system comprising an epoxy resin mixture and a hardener, wherein the epoxy resin mixture comprises:

(i) a first epoxy resin component comprising a bisphenol A- and/or a bisphenol F-based epoxy resin;
(ii) a second epoxy resin component comprising a novolac epoxy resin;
(iii) at least one viscosity modifier;
(iv) optionally, an adhesion promoter; and
(v) a first filler.

2. An epoxy resin mixture comprising:

(i) a first epoxy resin component comprising a bisphenol A- and/or a bisphenol F-based epoxy resin;
(ii) a second epoxy resin component comprising a novolac epoxy resin;
(iii) at least one viscosity modifier;
(iv) optionally, an adhesion promoter; and
(v) a first filler.

3. A multi-component epoxy resin system according to clause 1, or an epoxy resin mixture according to clause 2, wherein the first epoxy resin component comprises a bisphenol A-based epoxy resin and a bisphenol F-based epoxy resin.

4. A multi-component epoxy resin system or an epoxy resin mixture according to any one of clauses 1 to 3, wherein the first epoxy resin component is present in an amount of from 40 to 60 wt%, or from 45 to 50 wt%, of the epoxy resin mixture.

5. A multi-component epoxy resin system or an epoxy resin mixture according to any preceding clause, wherein the novolac epoxy resin is present in an amount of from 5 to 20 wt%, from 8 to 15 wt% or from 10 to 12 wt% of the epoxy resin mixture.

6. A multi-component epoxy resin system or an epoxy resin mixture according to any preceding clause, wherein the at least one viscosity modifier comprises an epoxy functional reactive diluent, an acrylate, or a combination thereof.

7. A multi-component epoxy resin system or an epoxy resin mixture according to clause 5, wherein the epoxy functional reactive diluent comprises a glycidyl ether, a diglycidyl ether, a triglycidyl ether, a glycidyl ester, a diglycidyl ester, a triglycidyl ester, or any combination thereof.

8. A multi-component epoxy resin system or an epoxy resin mixture according to clause 5 or clause 6, wherein the epoxy functional reactive diluent comprises hexanediol diglycidyl ether, 1,4- butanediol diglycidyl ether, 1,4-cyclohexanedimethanol diglycidyl ether, resorcinol diglycidyl ether, cyclohexanedimethanol diglycidyl ether, neopentyl glycol diglycidyl ether, dodecyl glycidyl ether or tetradecyl glycidyl ether, trimethylolpropane triglycidyl ether, glycerol-3-poly glycidyl ether, trimethylolpropane polyglycidyl ether or pentaerythritol polyglycidyl ether, optionally wherein the epoxy functional reactive diluent comprises 1,4-cyclohexanedimethanol diglycidyl ether.

9. A multi-component epoxy resin system or an epoxy resin mixture according to any one of clauses 5 to 7, wherein the acrylate is selected from trimethylolpropane triacrylate, tricyclodecane dimethanol diacrylate, dipentaerythritol pentaacrylate, triisocyanurate triacrylate, tricyclodecanedimethanol dimethacrylate, 1,6-hexanediol diacrylate, dipropylene glycol diacrylate, ethoxylated bisphenol A diacrylate, polyethylene glycol diacrylate, propoxylated neopentyl glycol diacrylate, tetraethylene glycol diacrylate, triethylene glycol diacrylate, tripropylene glycol diacrylate, 1,3-butylene glycol dimethacrylate, 1,4-butanediol dimethacrylate, 1,6-hexanediol dimethacrylate, ethoxylated bisphenol A dimethacrylate, polyethylene glycol dimethacrylate, tetraethylene glycol dimethacrylate, triethylene glycol dimethacrylate, ethylene glycol dimethacrylate and diethylene glycol dimethacrylate, ethoxylated or propoxylated trimethylolpropane triacrylate, ethoxylated pentaerythritol triacrylate, propoxylated glyceryl triacrylate, trimethylolpropane trimethacrylate, or any combination thereof.

10. A multi-component epoxy resin system or an epoxy resin mixture according to any preceding clause, wherein the adhesion promoter comprises an epoxy-functionalised silane.

11. A multi-component epoxy resin system or an epoxy resin mixture according to any preceding clause, wherein the epoxy-functionalised silane is 3-glycidoxypropyl trimethoxysilane.

12. A multi-component epoxy resin system or an epoxy resin mixture according to any preceding clause, wherein the epoxy resin mixture further comprises at least one of a dispersing agent, an anti-foaming agent, a thixotropic agent, an accelerator, a catalyst and a pigment.

13. A multi-component epoxy resin system according to any preceding clause, wherein the hardener comprises:

(a) a curing agent comprising an aliphatic amine and at least one of a cycloaliphatic amine and an epoxy-amine adduct;
(b) optionally, an adhesion promoter; and
(c) a second filler.

14. A hardener for a multi-component epoxy resin system, the hardener comprising:

(a) a curing agent comprising an aliphatic amine and at least one of a cycloaliphatic amine and an epoxy-amine adduct;
(b) optionally, an adhesion promoter;
and
(c) a second filler.

15. A multi-component epoxy resin system or a hardener according to clause 13 or clause 14, further comprising a wetting agent, a dispersing agent or a combined wetting and dispersing agent.

16. A multi-component epoxy resin system or a hardener according to any one of clauses 13 to 15, wherein the cycloaliphatic amine is selected from 1,3-cyclohexylenebis(methylamine), m-xylylenediamine; norbornane diamine, bis(4-aminophenyl)methane; benzylamine, 1,2-diaminocyclohexane; 1,4-diaminocyclohexane, bis(4-aminocyclohexyl)methane, bis(4-amino-3-methylcyclohexyl)methane, 2,2-bis(4-aminocyclohexyl)propane, 3-aminomethyl-3,5,5-trimethylcyclohexylamine (isophorone diamine), and any combination thereof.

17. A multi-component epoxy resin system or a hardener according to any one of clauses 13 to 16, wherein the aliphatic amine is selected from trimethylhexamethylenediamine, diethylenetriamine, triethylenetriamine, propane-1,3-diamine, 2,2-dimethyl-1,3-propanediamine (neopentanediamine), hexamethylenediamine, bis(3-aminopropyl)amine; N,N-bis(3-aminopropyl)methylamine, tetraethylenepentamine, pentaethylenehexamine, 2,2,4-trimethylhexane-1,6-diamine, and any combination thereof.

18. A multi-component epoxy resin system or a hardener according to any one of clauses 13 to 17, wherein the epoxy-amine adduct comprises the reaction product of:

(a) a bi-functional epoxy component; and

(b) an amine component.

19. A multi-component epoxy resin system or a hardener according to any one of clauses 13 to 18, further comprising an accelerator, optionally wherein the accelerator comprises a tertiary amine (e.g. 2,4,6-tris(dimethylaminomethyl) phenol, 2-piperazin-1-ethylamine, benzyldimethylamine, Triethanolamine), a sulfonic acid or an ester thereof (e.g. para-toluenesulfonic acid, methyl-toluenesulfonate), and/or salicylic acid.

20. A multi-component epoxy resin system or a hardener according to any one of clauses 13 to 19, wherein the hardener comprises an accelerator, optionally wherein the accelerator is salicylic acid.

21. A multi-component epoxy resin system or a hardener according to any one of clauses 13 to 20, wherein the hardener further comprises at least one alcohol.

22. A multi-component epoxy resin system or a hardener according to any one of clauses 13 to 21, wherein the curing agent is present in an amount of from 50 to 75 wt%, or from 60 to 70 wt%, of the hardener.

23. A multi-component epoxy resin system or a hardener according to any one of clauses 13 to 22, wherein the adhesion promoter comprises an amine functionalised silane.

24. A multi-component epoxy resin system or a hardener according to clause 22, wherein the amine functionalised silane is selected from 3-aminopropyl triethoxysilane, bis[3-(trimethoxysilyl)propyl]amine, 3-Aminopropyltrimethoxysilane, N-(2-Aminoethyl)-3-aminopropyltrimethoxysilane, N-(2-Aminoethyl)-3-aminopropylmethyldimethoxysilane, Bis[3-(trimethoxysilyl)propyl]amine, 3-Aminopropylmethyldiethoxysilane, N-(n-Butyl)-3-aminopropyltrimethoxysilane, 3-Ureidopropyltriethoxysilane, Bis[3-(triethoxysilyl)propyl]amine, and any combination thereof.

25. A multi-component epoxy resin system or a hardener according to any one of clauses 12 to 24, wherein the hardener further comprises at least one of a thixotropic agent, a rheology modifier and a pigment.

26. A multi-component epoxy resin system according to any one of the preceding clauses, wherein the epoxy resin mixture and the hardener are present at a ratio of from 3:1 to 1:1 or from 2.5:1 to 1.5:1, e.g. 2:1.

27. A kit comprising a multi-component epoxy resin system according to any one of clauses 1 to 26 contained within a two-compartment cartridge, and optionally an applicator.

28. A cured epoxy resin composition obtained from the multi-component epoxy resin system according to any one of the preceding clauses, following mixing of the epoxy resin mixture with the hardener and curing thereof.

29. The use of the multi-component epoxy resin system according to any one of the preceding clauses as an adhesive.

30. The use of the multi-component epoxy resin system according to any one of clauses 1 to 28 in the chemical fastening of construction elements.

31. A method of bonding an element to a substrate using the multi-component epoxy resin system according to any one of clauses 1 to 28, the method comprising:

(i) mixing the epoxy resin mixture with the hardener to obtain a mixed composition;
(ii) applying the mixed composition to at least one of the element and the substrate;
(iii) joining the element to the substrate; and
(iv) allowing the mixed composition to cure.

32. A method of embedding an element in a substrate using the multi-component epoxy resin system according to any one of clauses 1 to 28, the method comprising:

(i) forming a hole in a substrate;
(ii) mixing the epoxy resin mixture with the hardener to obtain a mixed composition;
(iii) introducing the mixed composition into the hole;
(iv) inserting the element into the hole containing the mixed composition; and
(v) allowing the mixed composition to cure.

## Claims

**1.** A multi-component epoxy resin system comprising an epoxy resin mixture and a hardener, wherein the epoxy resin mixture comprises:

(i) a first epoxy resin component comprising a bisphenol A- and/or a bisphenol F-based epoxy resin;
(ii) a second epoxy resin component comprising a novolac epoxy resin;
(iii) at least one viscosity modifier;
(iv) optionally, an adhesion promoter; and
(v) a first filler.

**2.** An epoxy resin mixture comprising:

(i) a first epoxy resin component comprising a bisphenol A- and/or a bisphenol F-based epoxy resin;
(ii) a second epoxy resin component comprising a novolac epoxy resin;
(iii) at least one viscosity modifier;
(iv) optionally, an adhesion promoter; and
(v) a first filler.

**3.** A multi-component epoxy resin system according to claim 1, or an epoxy resin mixture according to claim 2, wherein:

a. the first epoxy resin component comprises a bisphenol A-based epoxy resin and a bisphenol F-based epoxy resin;
b. the first epoxy resin component is present in an amount of from 40 to 60 wt%, or from 45 to 50 wt%, of the epoxy resin mixture;
c. the novolac epoxy resin is present in an amount of from 5 to 20 wt%, from 8 to 15 wt% or from 10 to 12 wt% of the epoxy resin mixture;
d. the at least one viscosity modifier comprises an epoxy functional reactive diluent, an acrylate, or a combination thereof, optionally wherein the epoxy functional reactive diluent comprises a glycidyl ether, a diglycidyl ether, a triglycidyl ether, a glycidyl ester, a diglycidyl ester, a triglycidyl ester, or any combination thereof;
e. the adhesion promoter comprises an epoxy-functionalised silane, optionally wherein the epoxy-functionalised silane is 3-glycidoxypropyl trimethoxysilane; and/or
f. the epoxy resin mixture further comprises at least one of a dispersing agent, an anti-foaming agent, a thixotropic agent, an accelerator, a catalyst and a pigment.

**4.** A multi-component epoxy resin system according to any preceding claim, wherein the hardener comprises:

(a) a curing agent comprising an aliphatic amine and at least one of a cycloaliphatic amine and an epoxy-amine adduct;
(b) optionally, an adhesion promoter; and
(c) a second filler.

**5.** A hardener for a multi-component epoxy resin system, the hardener comprising:

(a) a curing agent comprising an aliphatic amine and at least one of a cycloaliphatic amine and an epoxy-amine adduct;
(b) optionally, an adhesion promoter; and
(c) a second filler.

**6.** A multi-component epoxy resin system or a hardener according to claim 4 or 5, further comprising a wetting agent, a dispersing agent or a combined wetting and dispersing agent.

7. A multi-component epoxy resin system or a hardener according to any one of claims 4 to 6, wherein:

a. the cycloaliphatic amine is selected from 1,3-cyclohexylenebis(methylamine), m-xylylenediamine; norbornane diamine, bis(4-aminophenyl)methane; benzylamine, 1,2-diaminocyclohexane; 1,4-diaminocyclohexane, bis(4-aminocyclohexyl)methane, bis(4-amino-3-methylcyclohexyl)methane, 2,2-bis(4-aminocyclohexyl)propane, 3-aminomethyl-3,5,5-trimethylcyclohexylamine (isophorone diamine), and any combination thereof;
b. the aliphatic amine is selected from trimethylhexamethylenediamine, diethylenetriamine, triethylenetriamine, propane- 1,3-diamine, 2,2-dimethyl-1,3-propanediamine (neopentanediamine), hexamethylenediamine, bis(3-aminopropyl)amine; N,N-bis(3-aminopropyl)methylamine, tetraethylenepentamine, pentaethylenehexamine, 2,2,4-trimethylhexane-1,6-diamine, and any combination thereof; and/or
c. the epoxy-amine adduct comprises the reaction product of:

(i) a bi-functional epoxy component; and
(ii) an amine component

8. A multi-component epoxy resin system or a hardener according to any one of claims 4 to 7, further comprising an accelerator, optionally wherein the accelerator comprises a tertiary amine (e.g. 2,4,6-tris(dimethylaminomethyl) phenol, 2-piperazin-1-ethylamine, benzyldimethylamine, Triethanolamine), a sulfonic acid or an ester thereof (e.g. para-toluenesulfonic acid, methyl-toluenesulfonate), and/or salicylic acid, optionally wherein the hardener comprises an accelerator, further optionally wherein the accelerator is salicylic acid.

9. A multi-component epoxy resin system or a hardener according to any one of claims 4 to 8, wherein:

a. the hardener further comprises at least one alcohol;
b. the hardener further comprises at least one of a thixotropic agent, a rheology modifier and a pigment
c. the curing agent is present in an amount of from 50 to 75 wt%, or from 60 to 70 wt%, of the hardener;
d. the adhesion promoter comprises an amine functionalised silane, optionally wherein the amine functionalised silane is selected from 3-aminopropyl triethoxysilane, bis[3-(trimethoxysilyl)propyl]amine, 3-Aminopropyltrimethoxysilane, N-(2-Aminoethyl)-3-aminopropyltrimethoxysilane, N-(2-Aminoethyl)-3-aminopropylmethyldimethoxysilane, Bis[3-(trimethoxysilyl)propyl]amine, 3-Aminopropylmethyldiethoxysilane, N-(n-Butyl)-3-aminopropyltrimethoxysilane, 3-Ureidopropyltriethoxysilane, Bis[3-(triethoxysilyl)propyl]amine, and any combination thereof.

10. A multi-component epoxy resin system according to any one of the preceding claims, wherein the epoxy resin mixture and the hardener are present at a ratio of from 3:1 to 1:1 or from 2.5:1 to 1.5:1, e.g. 2:1.

11. A kit comprising a multi-component epoxy resin system according to any one of claims 1 to 10 contained within a two-compartment cartridge, optionally wherein the kit further comprises an applicator.

12. A cured epoxy resin composition obtained from the multi-component epoxy resin system according to any one of the preceding claims, following mixing of the epoxy resin mixture with the hardener and curing thereof.

13. The use of the multi-component epoxy resin system according to any one of the preceding claims as an adhesive, optionally in the chemical fastening of construction elements.

14. A method of bonding an element to a substrate using the multi-component epoxy resin system according to any one of claims 1 to 10, the method comprising:

(i) mixing the epoxy resin mixture with the hardener to obtain a mixed composition;
(ii) applying the mixed composition to at least one of the element and the substrate;
(iii) joining the element to the substrate; and
(iv) allowing the mixed composition to cure.

15. A method of embedding an element in a substrate using the multi-component epoxy resin system according to any one of claims 1 to 10, the method comprising:

(i) forming a hole in a substrate;
(ii) mixing the epoxy resin mixture with the hardener to obtain a mixed composition;

(iii) introducing the mixed composition into the hole;
(iv) inserting the element into the hole containing the mixed composition; and
(v) allowing the mixed composition to cure.

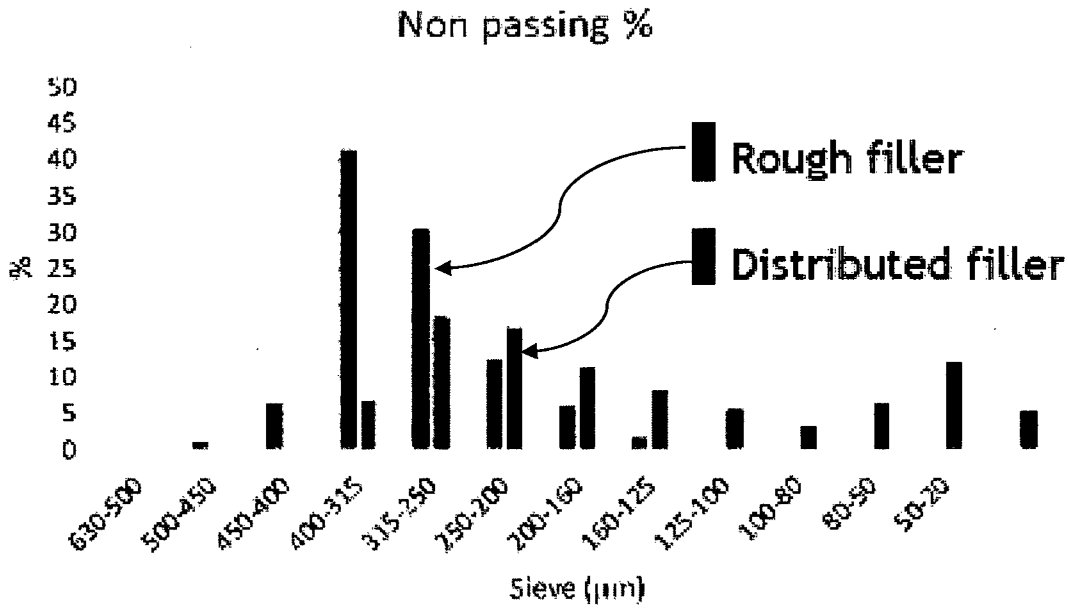


Figure 1

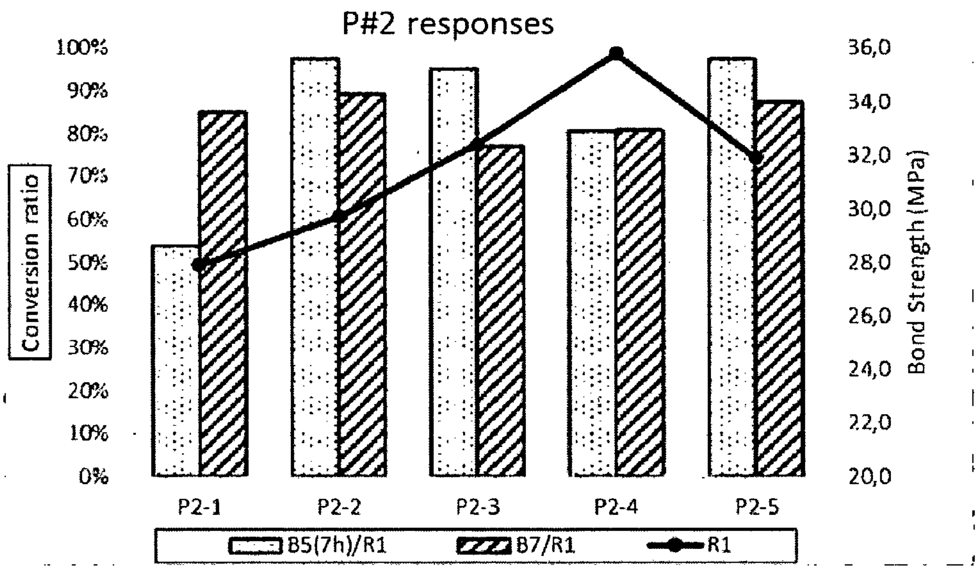


Figure 2

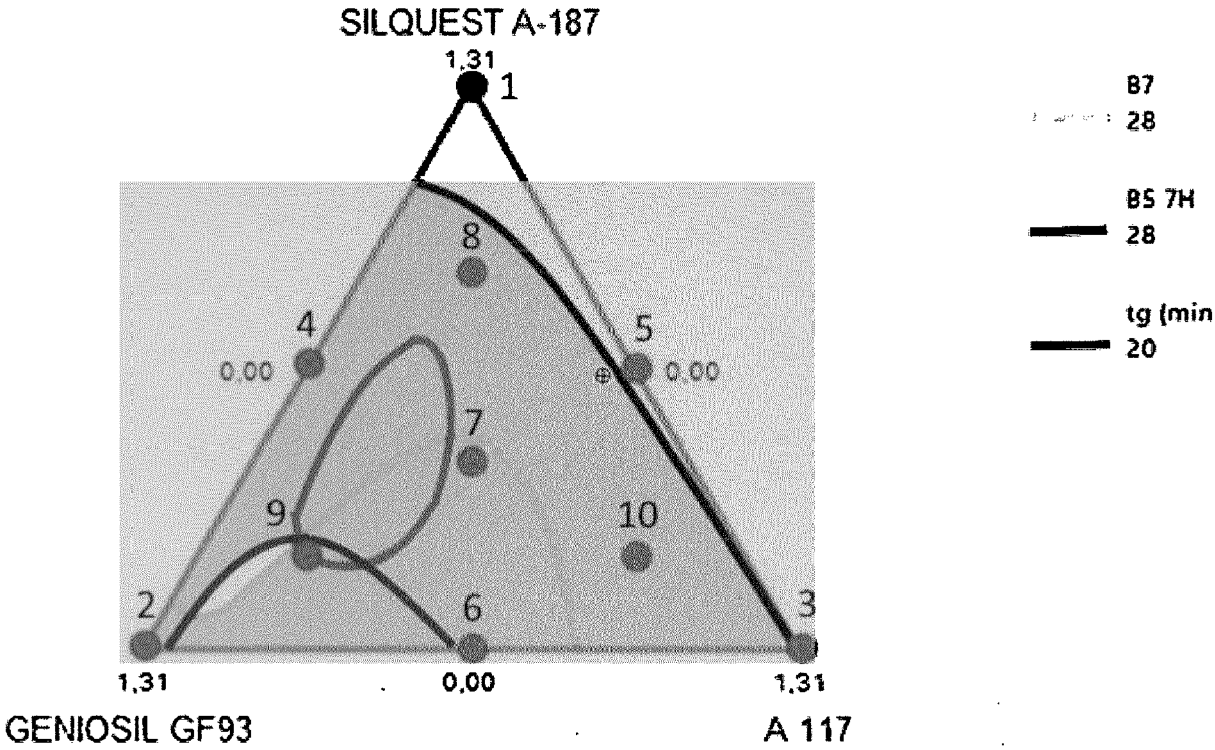


Figure 3

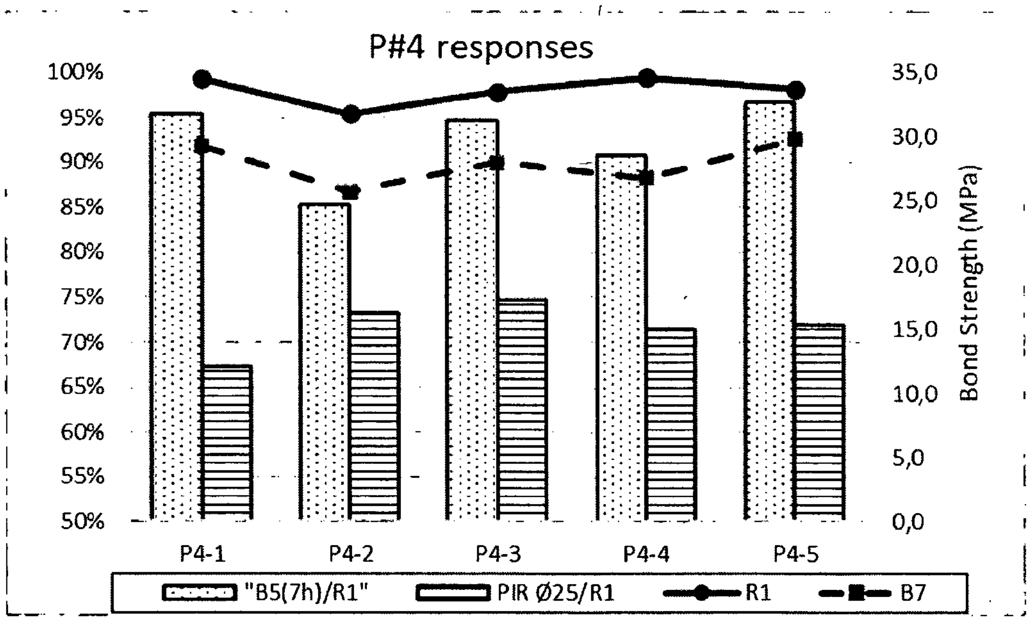


Figure 4

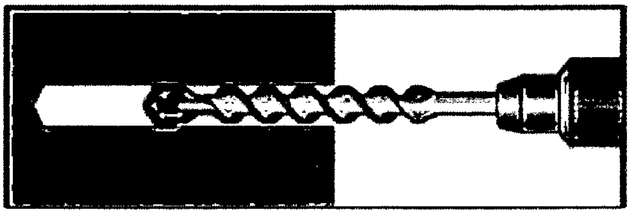

Figure 5a

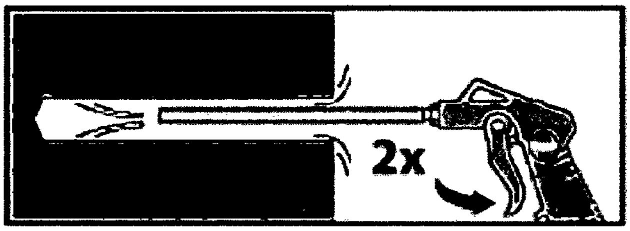


Figure 5b

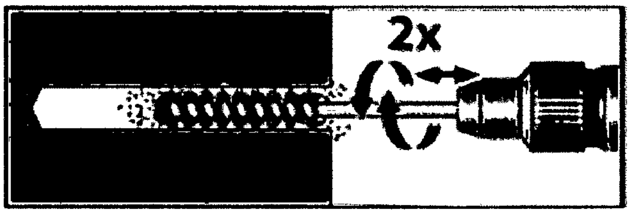


Figure 5c

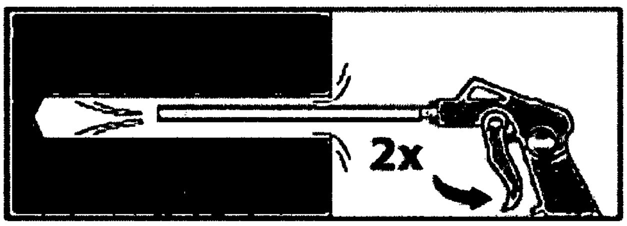


Figure 5d

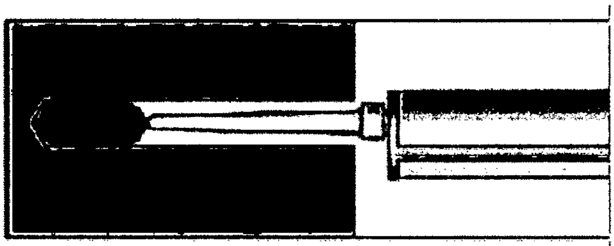

Figure 5e

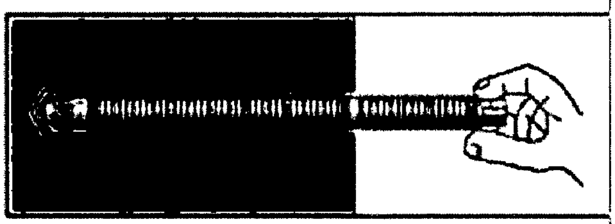

Figure 5f

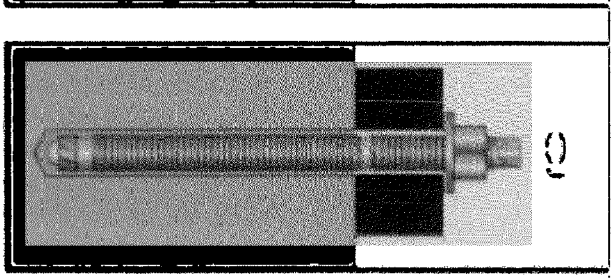

Figure 5g

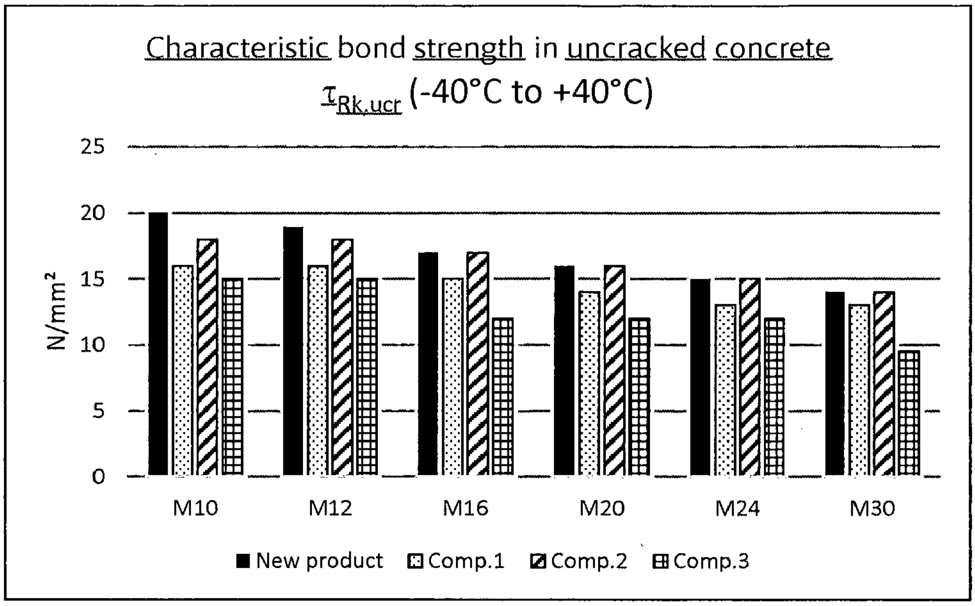


Figure 6

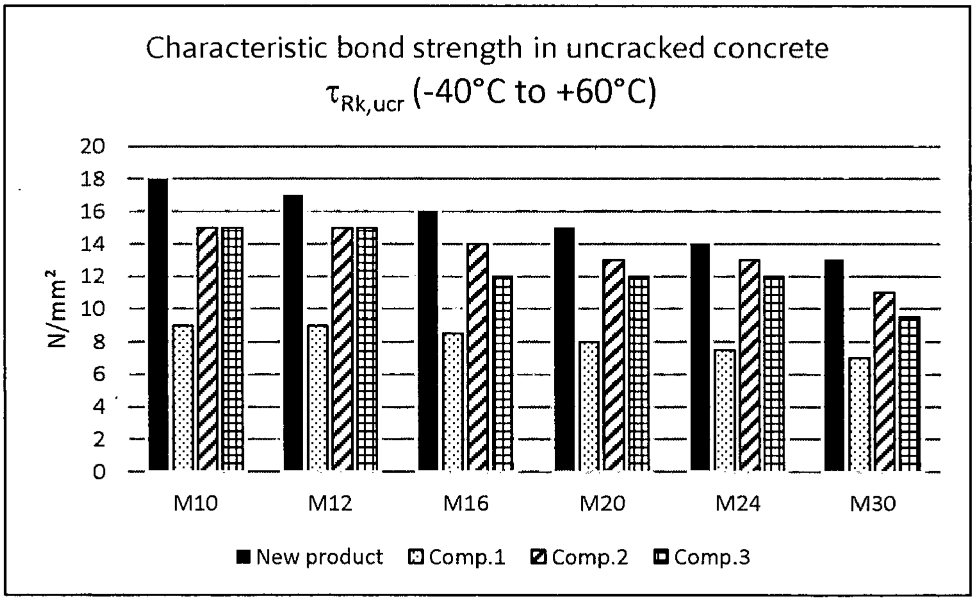


Figure 7

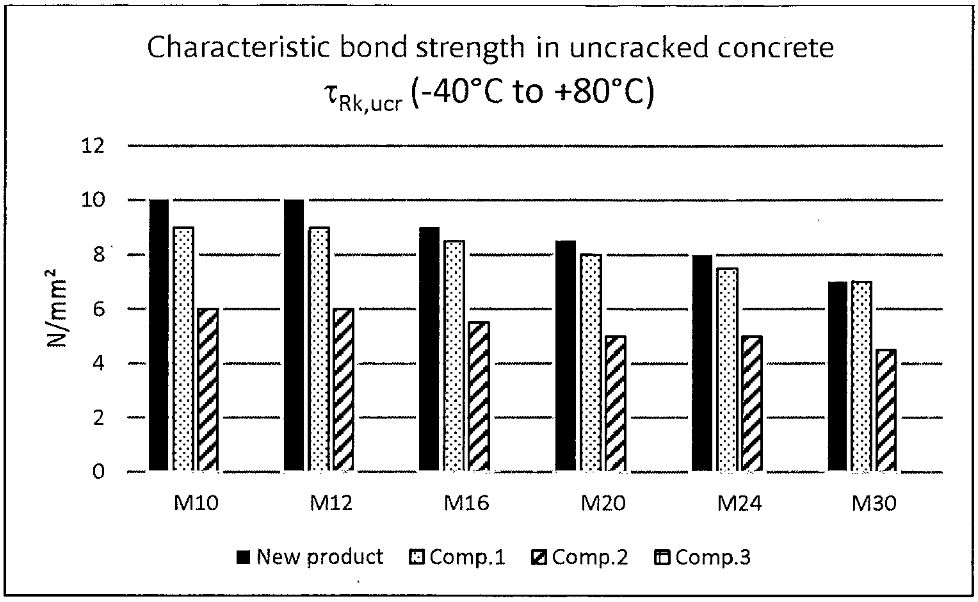


Figure 8

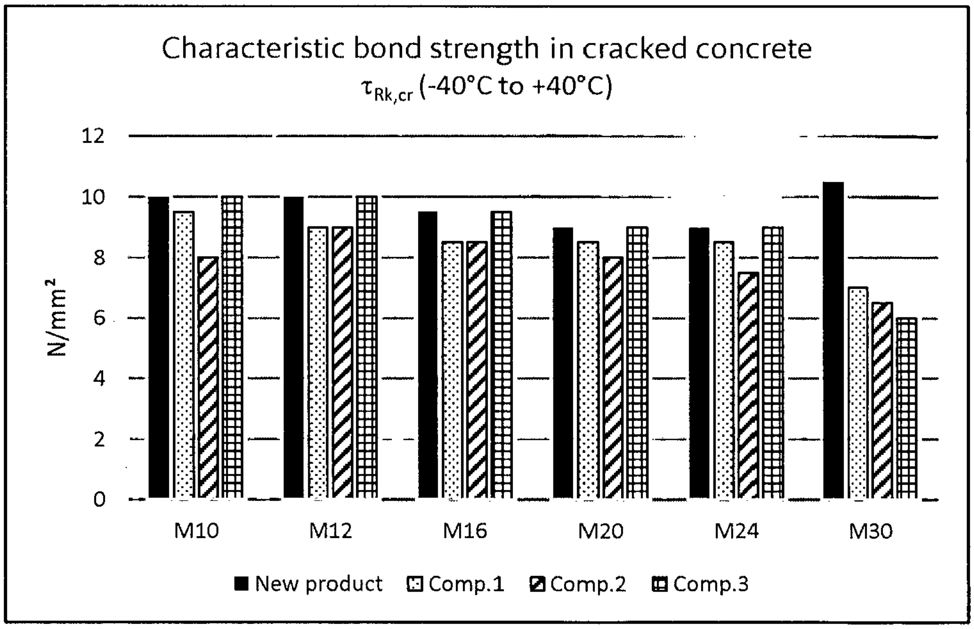


Figure 9

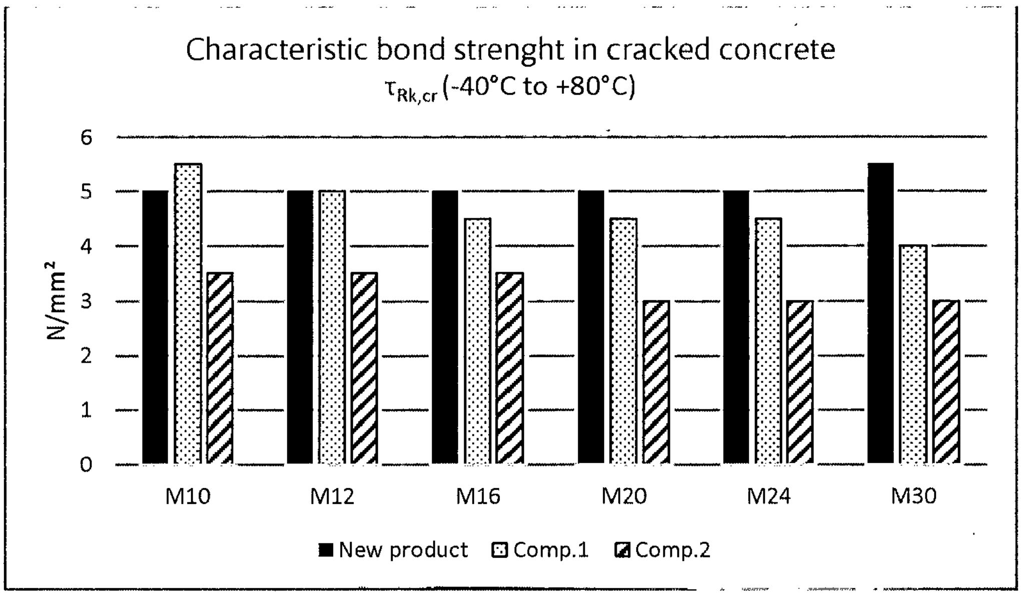
Characteristic bond strenght in cracked concrete
$\tau_{Rk,cr}$ (-40°C to +80°C)
N/mm²
6
5
4
3
2
1
0
M10
M12
M16
M20
M24
M30
New product
Comp.1
Comp.2

Figure 10

Europäisches Patentamt
European Patent Office
Office européen des brevets

# EUROPEAN SEARCH REPORT

Application Number
EP 24 31 5272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2021/214563 A1 (OWE LARS-ERIK [NO] ET AL) 15 July 2021 (2021-07-15)<br>* examples 14-8; tables 1,5 * | 1,2,4, 12-14<br>3,6-11, 15 | INV.<br>C08G59/24<br>C08G59/32<br>C08L63/00 |
| | ----- | | |
| Y | US 2021/301058 A1 (RAUCHEISEN KILIAN [DE] ET AL) 30 September 2021 (2021-09-30)<br>* paragraphs [0034], [0049], [0179] - paragraph [0037]; example 9 * | 3,6-11, 15 | |
| | ----- | | |
| Y | US 2016/159690 A1 (DUREAULT ALEX [FR] ET AL) 9 June 2016 (2016-06-09)<br>* paragraph [0001] - paragraphs [0023], [0044]; example 1 * | 3,6-11, 15 | |
| | ----- | | |

TECHNICAL FIELDS SEARCHED (IPC)

C09J
C08G
C08L

~~The present search report has been drawn up for all claims~~

2

| Place of search | Date of completion of the search | Examiner |
|---|---|---|
| Munich | 14 November 2024 | Adigbli, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 24 31 5272

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 10-15(completely); 6-9(partially)

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 31 5272

The Search Division considers that the present European patent application does not comply with the requirements of unity of invention and relates to several inventions or groups of inventions, namely:

1. claims: 1-4, 10-15(completely); 6-9(partially)

   an epoxy system comprising features (i)-(v)

---

2. claims: 5(completely); 6-9(partially)

   A hardener for an epoxy resin comprising an aliphatic amine and at least one of a cycloaliphatic amine

---

## ANNEX TO THE EUROPEAN SEARCH REPORT ON EUROPEAN PATENT APPLICATION NO. EP 24 31 5272

This annex lists the patent family members relating to the patent documents cited in the above-mentioned European search report. The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| US 2021214563 A1 | 15-07-2021 | CN 112236476 A | 15-01-2021 |
| | | EP 3578606 A1 | 11-12-2019 |
| | | EP 3802699 A1 | 14-04-2021 |
| | | KR 20210018873 A | 18-02-2021 |
| | | SA 520420723 B1 | 19-02-2023 |
| | | SG 11202011204P A | 30-12-2020 |
| | | US 2021214563 A1 | 15-07-2021 |
| | | WO 2019234139 A1 | 12-12-2019 |
| US 2021301058 A1 | 30-09-2021 | CN 112601770 A | 02-04-2021 |
| | | DE 102018121067 A1 | 05-03-2020 |
| | | EP 3844199 A1 | 07-07-2021 |
| | | US 2021301058 A1 | 30-09-2021 |
| | | WO 2020043521 A1 | 05-03-2020 |
| US 2016159690 A1 | 09-06-2016 | AU 2014292018 A1 | 11-02-2016 |
| | | CA 2918362 A1 | 22-01-2015 |
| | | CN 105377937 A | 02-03-2016 |
| | | EP 2826796 A1 | 21-01-2015 |
| | | EP 2826798 A1 | 21-01-2015 |
| | | EP 3022245 A1 | 25-05-2016 |
| | | EP 3489269 A1 | 29-05-2019 |
| | | ES 2707328 T3 | 03-04-2019 |
| | | ES 2708751 T3 | 11-04-2019 |
| | | HK 1215716 A1 | 09-09-2016 |
| | | JP 2016532742 A | 20-10-2016 |
| | | RU 2016105299 A | 23-08-2017 |
| | | SG 11201600309R A | 26-02-2016 |
| | | US 2016159690 A1 | 09-06-2016 |
| | | WO 2015007879 A1 | 22-01-2015 |

EPO FORM P0459

For more details about this annex : see Official Journal of the European Patent Office, No. 12/82

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 2530-83-8
- *CHEMICAL ABSTRACTS*, 919-30-2
- *CHEMICAL ABSTRACTS*, 13822-56-5
- *CHEMICAL ABSTRACTS*, 82985-35-1